# EUROPEAN PATENT APPLICATION

(11) **EP 4 692 383 A1**
(43) Date of publication of application: **11.02.2026**
(21) Application number: 24779457.1
(22) Date of filing: 13.03.2024
(51) Int. Cl.: C22B 3/38, B01D 11/04, C07F 9/38

(54) **METAL EXTRACTANT, METHOD FOR SEPARATING AND RECOVERING METAL IONS USING SAID METAL EXTRACTANT, AND COMPOUND**

(30) Priority: 27.03.2023 JP 2023050476
(71) Applicant: FUJIFILM Corporation, Tokyo 106-8620 (JP)
(72) Inventor: KUSHIDA, Yo, Ashigarakami-gun, Kanagawa 258-8577 (JP); MOCHIZUKI, Hiroaki, Ashigarakami-gun, Kanagawa 258-8577 (JP)
(74) Representative: HGF
(86) International application number: PCT/JP2024/009753
(87) International publication number: WO 2024/203328

(57) **Abstract**

Provided are a compound and a metal extractant represented by Formula (I), and a separation recovery method of metal ions using the metal extractant.

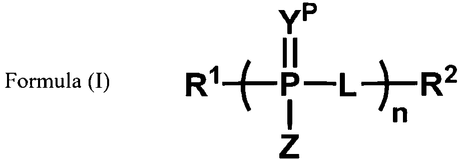

In Formula (I), R¹ and R² each independently represent a substituent having a molecular weight of 100 or higher, in which at least one of the substituents has a molecular weight of 160 or higher. Y^{P} represents a sulfur atom or an oxygen atom. Z represents a hydroxy group, a sulfanyl group, or a hydroxyaryl group. L represents a single bond, in which in a case where n represents 2 or more, L interposed between two adjacent P's represents a single bond or a linking group. n represents an integer of 1 to 6.

## Description

### BACKGROUND OF THE INVENTION

### 1. Field of the Invention

The present invention relates to a metal extractant that extracts metal ions present in a water phase to an oil phase, a separation recovery method of metal ions using this metal extractant, and a compound.

### 2. Description of the Related Art

Valuable metals such as noble metals or rare earth metals are essential elements for precision equipment, and stable supply and acquisition of the valuable metals with high purity is a big challenge. The valuable metals are typically mined as a mixture of plural kinds of metals. Therefore, the desired valuable metals need to be isolated and purified (high purity) from the mined mixture. In addition, the valuable metals that can be mined from mines are also limited, and thus a technique of recovering the valuable metals from industrial waste irrespective of mining is also important. In particular, along with the spread of electric vehicles, the amount of lithium ion batteries (LiB) wasted has been increasing every year. In LiB, a positive electrode active material including a metal element such as cobalt or nickel is used, and a significant increase in the demand for cobalt or nickel is also expected. In order to deal with the increase in the demand for valuable metals along with the trend, not only an increase in the amount of mining but also establishment of a technique of recycling waste LiB into a metal are desired.

As the isolated purification method of a desired valuable metal from the mined mixture and the method of recycling waste into a metal, a wet extraction method (solvent extraction method) is used. In the wet extraction method, in a case where an aqueous solution (water phase) including ions of a metal element (simply referred to as metal ions) and an organic phase including a metal extractant are brought into contact with each other, mixed, and left to stand to separate the two phases, the metal ions to which the metal extractant is coordinated are moved (extracted) to the organic phase. By extracting the organic phase, stripping the metal ions, and optionally purifying the metal ions, a desired metal can be isolated and purified, and the waste can be recycled as a (high-purity) metal.

As the metal extractant used for the wet extraction method, for example, JP2012-184503A describes a metal extractant consisting of a phenylphosphonic acid monoester with a hydrocarbon group having 4 to 6 branched carbon atoms and having 16 to 20 carbon atoms in total. In addition, as a metal extractant used for a wet extraction method of bringing an organic phase including a metal extractant and a water phase into contact with each other in multiple stages, JP1986-024852B (JP-S61-58531B) describes a metal extractant that is an alkylphosphonic acid monoalkyl ester where both of two alkyl groups are alkyl groups having 8 to 10 carbon atoms (note that a case where both of the two alkyl groups are the same alkyl group having 8 carbon atoms is excluded).

### SUMMARY OF THE INVENTION

JP2012-184503A and JP1986-024852B (JP-S61-58531B) describe that, in a case where the metal extractants described in JP2012-184503A and JP1986-024852B (JP-S61-58531B) are used for the wet extraction method, specific metal ions present in a water phase can be extracted and recovered to an oil phase. However, with any of the metal extractants, the selectivity (separability) of metal ions to be extracted is not sufficient, and a metal extractant having high selectivity where specific metal ions can be selectively separated and extracted from the water phase is desired for the wet extraction method.

In addition, in a case where the metal extractants described in JP2012-184503A and JP1986-024852B (JP-S61-58531B) are used for the wet extraction method, a long period of time is required for liquid phase separation between the water phase and the oil phase after the water phase and the oil phase are brought into contact with each other and mixed. As a result, the productivity of the wet extraction method (separation recovery efficiency of metal ions) is low, which is also not suitable for a continuous separation recovery treatment. In particular, in the metal extractant described in JP1986-024852B (JP-S61-58531B), the water phase and the oil phase need to be brought into contact with each other in multiple stages, and there is a problem in productivity. Therefore, a metal extractant that can increase a phase separation rate such that liquid phase separation is rapidly performed after the water phase and the oil phase are brought into contact with each other and mixed is also desired.

However, in JP2012-184503A and JP1986-024852B (JP-S61-58531B), further improvement of the selectivity of metal ions and improvement of the phase separation rate are not considered.

An object of the present invention is to provide a metal extractant that can extract specific metal ions present in a water phase to an oil phase with high selectivity while rapidly separating the water phase including the metal ions and the oil phase from each other, and a separation recovery method of metal ions using the metal extractant. In addition, an object of the present invention is to provide a compound that can be a metal extractant having the above-described excellent characteristics.

The present inventors conducted a thorough investigation on the metal extractant used for the wet extraction method and found that, by using a compound where a basic structure derived from a phosphoric acid-based compound (-P(=Y^{P})Z-:Y^{P} and Z are as described below) is adopted, at least one active hydrogen atom remains in the basic structure, and two substituents having a specific molecular weight are introduced, an increase in phase separation rate and improvement of selectivity (separability) can be achieved, and it is possible to solve a problem of the wet extraction method in the related art that the selectivity of metal ions to be separated and extracted generally decreases during an increase in phase separation rate.

The present invention has been completed as a result of repeated investigation based on the above findings.

That is, the above-described objects have been achieved by the following means.
<1> A metal extractant that extracts metal ions present in a water phase to an oil phase,
   in which the metal extractant is represented by Formula (I), 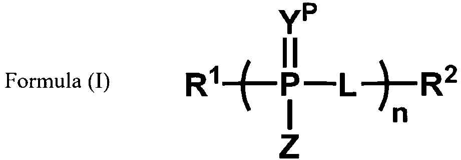
   in Formula (I), R¹ and R² each independently represent a substituent having a molecular weight of 100 or higher, in which at least one of the substituents has a molecular weight of 160 or higher,
   Y^{P} represents a sulfur atom or an oxygen atom,
   Z represents a hydroxy group, a sulfanyl group, or a hydroxyaryl group,
   L represents a single bond, in which in a case where n represents 2 or more, L interposed between two adjacent P's represents a single bond or a linking group, and
   n represents an integer of 1 to 6.
<2> The metal extractant according to <1>,
   in which at least one of R¹ or R² represents a substituent including any one kind of a nitrogen atom, an oxygen atom, or a sulfur atom.
<3> The metal extractant according to <1> or <2>,
   in which n represents 1.
<4> The metal extractant according to any one of <1> to <3>,
   in which at least one of R¹ or R² represents a substituent having a branched structure.
<5> The metal extractant according to any one of <1> to <4>,
   in which at least one of R¹ or R² represents a substituent including a hydrocarbon group having 3 or more branched carbon atoms or a substituent including a hydrocarbon group having 9 or more carbon atoms.
<6> The metal extractant according to any one of <1> to <5>,
   in which at least one of R¹ or R² represents a substituent including a hydrocarbon group having 1 or more branched carbon atoms and having 9 or more carbon atoms.
<7> The metal extractant according to any one of <1> to <6>,
   in which at least one of R¹ or R² represents a substituent having a ring structure.
<8> The metal extractant according to any one of <1> to <7>,
   in which the metal ions are ions of a metal element belonging to Group 1 to Group 14 in a periodic table.
<9> The metal extractant according to any one of <1> to <8>,
   in which the metal extractant is used for extraction and separation of two or more kinds of metal ions belonging to different groups in a periodic table among the metal ions.
<10> A separation recovery method of metal ions, the separation recovery method including:
   mixing a water phase including plural kinds of metal ions with an oil phase including the metal extractant according to any one of <1> to <9>.
<11> A compound represented by Formula (I), 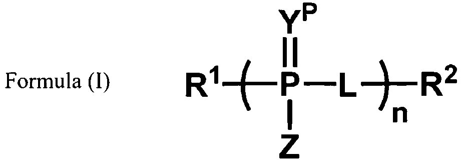
   in Formula (I), R¹ and R² each independently represent a substituent having a molecular weight of 100 or higher, in which at least one of the substituents has a molecular weight of 160 or higher, at least one of R¹ or R² represents a substituent having a branched structure,
   Y^{P} represents a sulfur atom or an oxygen atom,
   Z represents a hydroxy group, a sulfanyl group, or a hydroxyaryl group,
   L represents a single bond, in which in a case where n represents 2 or more, L interposed between two adjacent P's represents a single bond or a linking group, and
   n represents an integer of 1 to 6.

The present invention can provide a metal extractant that can extract specific metal ions present in a water phase to an oil phase with high selectivity while rapidly separating the water phase including the metal ions and the oil phase from each other, and a separation recovery method of metal ions using the metal extractant. In addition, the present invention can provide a compound that can be a metal extractant having the above-described excellent characteristics.

The above-described and other characteristics and advantageous effects of the present invention will be clarified from the following description appropriately with reference to the accompanying drawings.

### BRIEF DESCRIPTION OF THE DRAWINGS

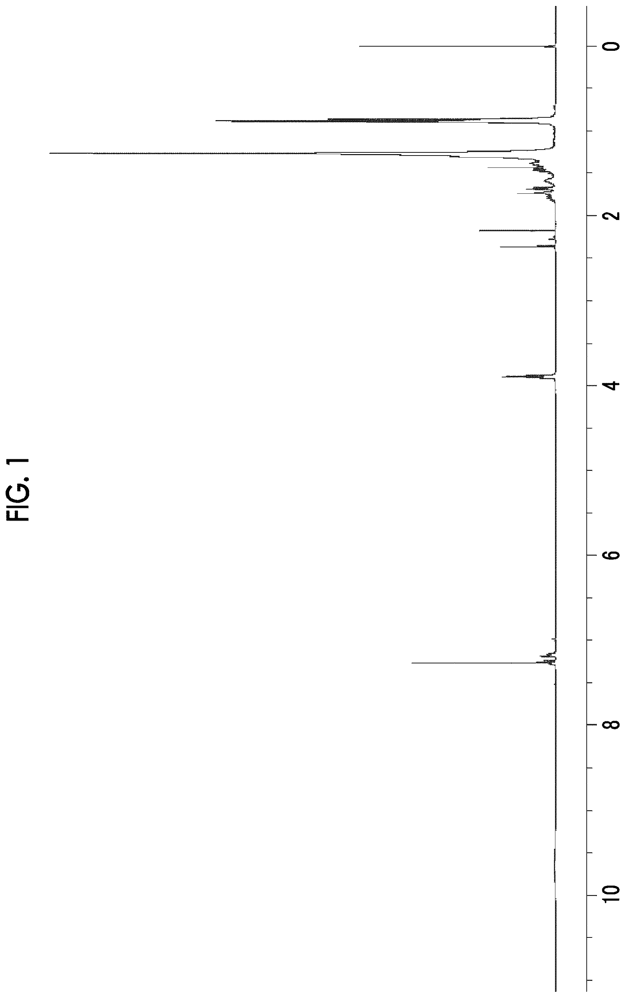

FIG. 1 is a ¹H-NMR chart showing a compound E-1 synthesized in Example.

### DESCRIPTION OF THE PREFERRED EMBODIMENTS

In the present invention, in a case where a numerical range is shown to describe a content, physical properties, or the like of a component, any upper limit value and any lower limit value can be appropriately combined to obtain a specific numerical range in a case where an upper limit value and a lower limit value of the numerical range are described separately. In a case where a plurality of numerical ranges represented by "~" are set and described, the upper limit value and the lower limit value which form each of the numerical ranges are not limited to a specific combination described before and after "to" as a specific numerical range and can be set to a numerical range obtained by appropriately combining the upper limit value and the lower limit value of each numerical range. In the present invention, numerical ranges represented by "to" include numerical values before and after "to" as lower limit values and upper limit values.

In the present invention, the expression of a compound (for example, in a case where a compound is represented by an expression with "compound" added to the end) refers to not only the compound itself but also a salt or an ion thereof. In addition, this expression also refers to a derivative obtained by modifying a part of the compound, for example, by introducing a substituent into the compound within a range where the effects of the present invention do not deteriorate.

A substituent, a linking group, or the like (hereinafter, referred to as "substituent or the like") that is not specified in the present invention regarding whether to be substituted or unsubstituted may have an appropriate substituent. Accordingly, even in a case where a YYY group is simply described in the present invention, this YYY group includes not only an aspect not having a substituent but also an aspect having a substituent. The same shall be applied to a compound which is not specified in the present specification regarding whether to be substituted or unsubstituted. Examples of a preferable substituent include groups selected from the substituent GZ described below.

In the present invention, in a case where a plurality of substituents or the like represented by a specific reference numeral are present or a plurality of substituents or the like are simultaneously or alternatively defined, the respective substituents or the like may be the same as or different from each other. In addition, unless specified otherwise, in a case where a plurality of substituents or the like are adjacent to each other, the substituents may be linked or fused to each other to form a ring.

In the present specification, "metal elements belonging to different groups in the periodic table of elements" in the specific metal ion group will be referred to as "different-group metal elements", and particularly "different-group metal elements of the same period in the periodic table" will also be referred to as "same-period different-group metal elements". In addition, "ions of the different-group metal elements" and "ions of the same-period different-group metal elements" will also be referred to as "different-group metal ions" and "same-period different-group metal ions", respectively.

In the present invention, unless specified otherwise, "ppm" representing a content or the like is based on mass and represents "mass ppm".

### [Metal Extractant]

A metal extractant according to an embodiment of the present invention includes a compound represented by Formula (I), and may include appropriately other components within a range where the effects of the present invention do not deteriorate. In addition, the metal extractant according to the embodiment of the present invention may include other compounds (other metal extractants) that function as extractants of metal ions other than the compound represented by Formula (I). However, the compound represented by Formula (I) exhibits the above-described excellent characteristics as the metal extractant as described below. Therefore, it is preferable that the metal extractant according to the embodiment of the present invention includes the compound represented by Formula (I) alone. In the present invention, the meaning of the metal extractant according to the embodiment of the present invention including the compound represented by Formula (I) alone includes an aspect where only the compound represented by Formula (I) is included and an aspect where a content of the other metal extractants with respect to a total mass including the compound represented by Formula (I) is 10% by mass or less.

In addition, each of forms of the metal extractant according to the embodiment of the present invention and the compound represented by Formula (I) is not particularly limited, and may be a solid such as powder or a granule or may be a liquid (solution) in which the substance is dissolved in an organic solvent.

The metal extractant according to the embodiment of the present invention has a function of extracting metal ions present in a water phase to an oil phase, and can be suitably used particularly for a wet extraction method. By using the metal extractant according to the embodiment of the present invention in the wet extraction method, specific metal ions present in the water phase can be extracted to the oil phase with high selectivity and, preferably, high recovery rate (high extraction rate). In particular, the metal extractant can extract specific metal ions from plural kinds of metal ions present in the water phase to the oil phase with high selectivity and, preferably, high recovery rate.

In the present invention, as the metal ions that can be extracted to the oil phase among plural kinds of metal ions present in the water phase, ideally, one kind of specific metal ions can be used. However, two or more kinds of metal ions can also be used. Even in a case where two or more kinds of metal ions are included, one kind of metal ions among the two or more kinds of metal ions can be extracted (separated and recovered) with higher selectivity and, preferably, with higher recovery rate than those of the other metal ions (including metal ions extracted to the oil phase). For example, while extracting, as ions of valuable metal elements, two or more kinds of different-group metal ions, for example, two or more kinds of metal ions belonging to Group 1 to Group 14 in the periodic table, desirably two or more kinds of different-group metal ions, and particularly desirably cobalt ions and nickel ions that are the same-period different-group metal ions to the oil phase, one kind of metal ions among the two or more kinds of metal ions can be extracted to the oil phase with high selectivity and, preferably, high recovery rate.

Since the same-period different-group metal ions have similar physical behaviors and similar chemical behaviors, it is not easy to separate and recover any one kind of metal ions among the same-period different-group metal ions with high selectivity. However, in the present invention where the compound represented by Formula (I) is used as the metal extractant, while extracting the same-period different-group metal ions having similar physical behaviors and similar chemical behaviors, in particular, metal ions belonging to Group 9 (in particular, cobalt ions) and metal ions belonging to Group 10 (in particular, nickel ions) that are required along with the recent rapid spread of lithium ion batteries, one kind of metal ions among the two or more kinds of metal ions can be recovered with high selectivity and, preferably, high recovery rate. Therefore, the present invention can largely contribute to further spread of electric vehicles and construction of a sustainable society.

In addition, in the present invention, being capable of extracting metal ions with high recovery rate with high selectivity represents that only one specific kind of metal ions among plural kinds of metal ions present in the water phase can be extracted. In addition, in a case where two or more kinds of metal ions are extracted to the oil phase, being capable of extracting metal ions with high selectivity represents that specific metal ions can be extracted and separated from the other metal ions such that, among the two or more kinds of extracted metal ions, a ratio of the amount of specific metal ions (typically one kind) to be extracted to the total amount of the other metal ions extracted [(the amount of the specific metal ions extracted)/(the total amount of the other metal ions extracted) is 3.0 or more (separability, selection ratio). The ratio (selection ratio) is preferably 4.0 or more, more preferably 5.0 or more, and particularly preferably 6.0 or more. The upper limit thereof is not particularly limited, but may be, for example, 50.

In addition, in the present invention, being capable of extracting metal ions with high recovery rate represents that the metal ions can be extracted such that, regarding metal ions (specific metal ions to be extracted) extracted in the maximum amount among the two or more kinds of extracted metal ions, a ratio of the amount of the metal ion extracted to the oil phase to the content of the metal ions (before the extraction) in the water phase [(the amount of the metal ions extracted to the oil phase)/(the content of the metal ions in the water phase] is 60% or more. The ratio (recovery rate) is preferably 80% or more and more preferably 90% or more. The upper limit is not particularly limited and is ideally the total amount (100%) of the metal ions present in the water phase. For example, the upper limit is preferably 99% or less and can also be 95% or less or less or 90% or less. The specific amount of the metal ions extracted varies depending on the content of the metal ions present in the water phase and can be, for example, 30,000 mass ppm or less and preferably 20,000 mass ppm or less.

In the present invention, a period of time required for rapidly performing the liquid phase separation (phase separation) after the water phase and the oil phase are brought into contact with each other and mixed is not uniquely determined depending on the content of the metal ions or the metal extractant, the liquid amount of the water phase and the oil layer, mixing conditions, and the like. The rapid liquid phase separation of the water phase and the oil phase represents that both of the phases are separated, for example, under conditions in Examples described below to enter a state where a phase interface can be verified by visual inspection until 5 minutes is elapsed (when 5 minutes is elapsed) after stopping the mixing of both of the phases. In the present invention, a period of time required until the liquid phase separation of both of the phases is completed (the state where the phase interface can be verified by visual inspection is established) after the water phase and the oil phase are brought into contact with each other and mixed will be referred to as a phase separation time, and a speed at which liquid phase separation of both of the phases is performed after the water phase and the oil phase are brought into contact with each other and mixed will be referred to as a phase separation rate.

### (Compound Represented by Formula (I))

The metal extractant according to the embodiment of the present invention consists of a compound having a chemical structure represented by Formula (I) (also referred to as the compound according to the embodiment of the present invention). This compound has excellent characteristics as the metal extractant as described above.

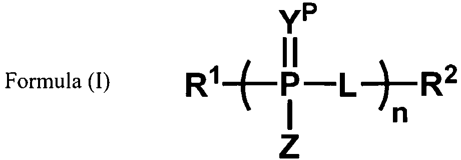

In Formula (I), R¹ and R² each independently represent a substituent having a molecular weight of 100 or higher, in which at least one of the substituents has a molecular weight of 160 or higher. That is, R¹ and R² each independently represent a substituent having a molecular weight of 100 or higher, in which at least one of the substituents has a molecular weight of 160 or higher. A compound where the two substituents R¹ and R² having the specific molecular weight are bonded to "-P(=Y^{P})Z-" (Y^{P} and Z are as described below) that is the basic structure in Formula (I) is the metal extractant having the excellent effects.

Examples of the compound represented by Formula (I) having the basic structure include a compound including 1 to 6 acid groups where at least one oxygen atom is substituted with a sulfur atom of a phosphate group, a phosphonate group, a phosphinate group, and an acid group thereof. Examples of a compound where n in Formula (I) represents 1 include a phosphoric acid-based compound such as a phosphate compound (R¹O-P(=O)(Z)-OR²), a phosphonate compound (R¹-P(=O)(Z)-OR², R¹O-P(=O)(Z)-R²), or a phosphinic acid compound (R¹-P(=O)(Z)-R²), and a thiophosphoric acid-based compound where at least one oxygen atom in each of the phosphoric acid-based compounds is converted into a sulfur atom. "Z" in each of the compounds has the same definition as Z in Formula (I). From the viewpoint that the selectivity and the phase separation rate of the metal extractant can be simultaneously improved at a higher level, the compound represented by Formula (I) where n represents 1 is preferably a phosphoric acid-based compound, more preferably a phosphate compound or a phosphonate compound, still more preferably a phosphonate compound, and still more preferably a phosphonic acid monoester compound.

As both of the substituents that can be used as R¹ and R², substituents having a molecular weight of 100 or higher are adopted. In addition, the molecular weight of at least one of the substituents that can be used as R¹ and R² is set to be 160 or higher. Both of the substituent that can be used as R¹ and the substituent that can be used as R² have a molecular weight of 100 or higher, and at least one of the substituents has a molecular weight of 160 or higher. As a result, the compound represented by Formula (I) is the metal extractant having high selectivity even in a case where the phase separation rate is fast.

From the viewpoints of the selectivity and the phase separation rate of the metal extractant, the molecular weights of the substituents that can be used as R¹ and R² are preferably 120 or higher, more preferably 160 or higher, and still more preferably 200 or higher. On the other hand, the upper limit of the molecular weights of the substituents is not particularly limited, and can be appropriately determined. For example, the upper limit can be 400 or lower and preferably 350 or lower.

From the viewpoint that the selectivity and the phase separation rate of the metal extractant can be simultaneously improved at a high level, the molecular weight of both of the substituents that can be used as R¹ and R² is preferably 160 or higher. From the viewpoint that the selectivity and the phase separation rate of the metal extractant can be simultaneously improved at a higher level, the substituent having a molecular weight of 160 or higher among the substituents that can be used as R¹ and R² preferably has a molecular weight of 200 or higher, more preferably has a molecular weight of 220 or higher, and still more preferably has a molecular weight of 240 or higher. The upper limit of the molecular weight in the substituent having a molecular weight of 160 or higher is not particularly limited and can be the above-described upper limit value of the molecular weights of the substituents that can be used as R¹ and R². In a case where the molecular weights of the substituents that can be used as R¹ and R² is 160 or higher, it is preferable that at least one of the substituents has the above-described molecular weight.

In the present invention, the molecular weight of the substituent refers to the total amount of atomic weights of atoms forming the substituent. Note that, in a case where the substituent has a polymer chain in the structure, the molecular weight of the substituent refers to a number-average molecular weight in terms of standard polystyrene measured by gel permeation chromatography (GPC) described below.

In the substituents that can be used as R¹ and R², the total number of carbon atoms forming each of the substituents is not particularly limited as long as the above-described molecular weight is satisfied, and is appropriately determined. For example, from the viewpoints of the selectivity and the phase separation rate of the metal extractant, the total number of carbon atoms (hereinafter, simply referred to as the number of carbon atoms) in each of the substituents that can be used as R¹ and R² is preferably 8 or more, more preferably 10 or more, still more preferably 12 or more, and still more preferably 14 or more. On the other hand, the upper limit of the number of carbon atoms is not particularly limited, and can be appropriately determined. For example, the upper limit can be 30 or less and preferably 24 or less.

From the viewpoint that the selectivity and the phase separation rate of the metal extractant can be simultaneously improved at a higher level, the number of carbon atoms in the substituent having a molecular weight of 160 or higher among the substituents that can be used as R¹ and R² is preferably 12 or more, more preferably 14 or more, still more preferably 15 or more, and still more preferably 16 or more. The upper limit of the number of carbon atoms in the substituent having a molecular weight of 160 or higher is not particularly limited, and can be the upper limit value of the number of carbon atoms in the substituents that can be used as R¹ and R².

The substituents that can be used as R¹ and R² are not particularly limited, and examples thereof include various substituents and a group including a combination of substituents. In the present invention, "various substituents" described above each independently refer to the substituents represented by R¹ and R², and "the group including a combination of substituents" refer to a substituent including a combination of a plurality of substituents. In order to clearly distinguish between "various substituents" and "the group including a combination of substituents", each of "various substituents" will also be referred to as "single substituent", and "the group including a combination of substituents" will also be referred to as "complex substituent". The complex substituent is formed by typically removing hydrogen atoms of a necessary number of single substituents from single substituents forming the complex substituent to bond a plurality of single substituents to each other.

In the complex substituent, a position where a specific substituent is substituted with another substituent is not particularly limited, and can be appropriately determined. For example, in a case where a phenyl group is substituted with another substituent, the substitution position may be any one of the 2-, ..., or 4-position with respect to the bonding position of the phenyl group.

In the present invention, the substituents that can be used as the R¹ and R² can be interpreted as single substituents as much as possible. For example, a 2-ethylhexyl group can also be interpreted as a complex substituent where an ethyl group is substituted with a hexyl group, but is interpreted as a branched alkyl group. In addition, a hexyloxy group can also be interpreted as a complex substituent including a combination of a hexyl group and an oxygen atom, but can be interpreted as an alkoxy group.

Each of the substituents that can be used as R¹ and R² (including a single substituent and a complex substituent) may also be a hydrocarbon group including only a carbon atom and a hydrogen atom, or may also be a heteroatom-containing substituent including at least one kind of a heteroatom such as a nitrogen atom, an oxygen atom, or a sulfur atom. At least one of the substituents that can be used as R¹ and R² is preferably a heteroatom-containing substituent. The heteroatom-containing substituent preferably includes an oxygen atom or a sulfur atom and more preferably includes an oxygen atom as a heteroatom. In addition, the number of heteroatoms in the heteroatom-containing substituent is not particularly limited, and can be 1 to 4 and is preferably 1. In the heteroatom-containing substituent, the heteroatom may be present at any position of the substituent, for example, may be present at an atomic chain forming the substituent or at a terminal thereof. In the present invention, it is preferable that one heteroatom is present at a terminal of an atomic chain forming the substituent and is bonded to P in Formula (I).

The heteroatom-containing substituent is not particularly limited, and examples thereof include a single substituent such as an alkoxy group, an aryloxy group, a heterocyclic oxy group, an alkylthio group, an arylthio group, or a heterocyclic thio group described below, and a complex substituent such as a group including a combination of the single substituent and an aryl group (a substituent having a ring structure).

The single substituents that can be used as R¹ and R² are not particularly limited, and examples thereof include appropriate substituents. For example, a group selected from a substituent GZ described below (not that regarding the number of carbon atoms and the molecular weight, the above-described values are adopted without adopting values of the substituent GZ). Among these, a hydrocarbon group such as an alkyl group, an alkenyl group, an alkynyl group, or an aryl group, a heterocyclic group, an alkoxy group, an aryloxy group, a heterocyclic oxy group, an alkylthio group, an arylthio group, a heterocyclic thio group, an amino group, or the like is preferable, from the viewpoints of the selectivity and the phase separation rate of the metal extractant, an alkyl group, an alkoxy group, or an alkylthio group is more preferable, and an alkyl group or an alkoxy group is still more preferable.

Any of the alkyl group, the alkenyl group, or the alkynyl group that can be used as the single substituent may be a straight chain, a branched chain, or a cyclic chain and is more preferably a branched chain from the viewpoint that the selectivity and the phase separation rate of the metal extractant can be simultaneously improved at a higher level. The molecular weight and the number of carbon atoms in the alkyl group, the alkenyl group, or the alkynyl group satisfy the above-described ranges.

The aryl group, the heterocyclic group, the aryloxy group, the heterocyclic oxy group, the arylthio group, the heterocyclic thio group, and the amino group that can be used as the single substituent are the same as the corresponding groups in the substituent GZ described below, respectively.

Both of the alkoxy group and the alkyl group forming the alkylthio group that can be used as the single substituent are the same as the alkyl group that can be used as the single substituent.

The complex substituents that can be used as R¹ and R² are not particularly limited, and examples thereof include a group including a combination of a plurality of (single) substituents, for example, substituents selected from the substituent GZ. The number of single substituents forming the complex substituent is not particularly limited, and can be 2 to 6 and is preferably 2 to 4.

Examples of the complex substituent include a group including a combination of hydrocarbon groups (a group including an alkyl group, an alkenyl group, or an alkynyl group and an aryl group), a group including a combination of an alkoxy group or an alkylthio group and an aryl group, and a group including a combination of an alkyl group, an alkenyl group, or an alkynyl group and an amino group. In a case where the complex substituent includes an oxygen atom or a sulfur atom bonded to the alkyl group, the oxygen atom or the sulfur atom is interpreted as each of the atoms derived from the alkoxy group or the alkylthio group. For example, a complex substituent "alkyl group-oxygen atom-phenyl group" in compounds E-4 and E-5 synthesized in Examples is interpreted as a group including a combination of an alkoxy group and a phenyl group without being interpreted as a group including a combination of an alkyl group and a phenoxy group and as a group including a combination of an alkyl group, an oxygen atom, and a phenyl group. The above-described interpretation also applies to a case where the complex substituent includes an oxygen atom bonded to an alkenyl group or an alkynyl group.

From the viewpoint that the selectivity and the phase separation rate of the metal extractant can be simultaneously improved at a higher level, it is preferable that the complex substituent includes a ring structure. The ring structure in the complex substituent is not particularly limited, and examples thereof include a ring structure derived from a cycloalkyl group, an aryl group, or a heterocyclic group. A ring structure derived from an aryl group or an aromatic heterocyclic group is preferable, and from the viewpoints of the selectivity and the phase separation rate of the metal extractant, a ring structure derived from an aryl group is more preferable. As the complex substituent including the ring structure, specifically, a group including a combination of an alkyl group and an aryl group, a group including a combination of an alkoxy group or an alkylthio group and an aryl group, or the like is preferable, an alkoxyaryl group is more preferable, and an alkoxyphenyl group is still more preferable.

From the viewpoints of the selectivity and the phase separation rate of the metal extractant, as each of the substituents that can be used as R¹ and R², a single substituent such as an alkyl group, an alkoxy group, or an alkylthio group, or a complex substituent including a combination of an alkoxy group or an alkylthio group and an aryl group and including a ring structure is preferable among the above-described examples.

Among the preferable substituents, a complex substituent including an alkoxy group, an alkylthio group, and a ring structure is preferably a substituent having a molecular weight of 160 or higher from the viewpoints of the selectivity and the phase separation rate of the metal extractant.

A combination of the substituent that can be used as R¹ and the substituent that can be used as R² is not particularly limited, and the substituents that can be used as R¹ and R² can be appropriately combined.

For example, a molecular structure of the substituent is not particularly limited. From the viewpoints of the selectivity and the phase separation rate of the metal extractant, as the substituents that can be used as R¹ and R², a combination including a substituent having a branched structure (a combination of substituents at least one of which has a branched structure) is preferable, and a combination of substituents having a branched structure or a combination of a substituent having a branched structure and a substituent including a ring structure (in particular, a complex substituent) is more preferable. Here, the substituent having a branched structure is not particularly limited. Among the above-described examples, for example, a hydrocarbon group such as an alkyl group, an alkenyl group, or an alkynyl group, or a single substituent or a complex substituent including a hydrocarbon group can be used. A single substituent such as an alkyl group, an alkoxy group, or an arylthio group, or a complex substituent such as a group including a combination of an alkoxy group or an alkylthio group and an aryl group is preferable, and an alkyl group, an alkoxy group, or a group including a combination of an alkoxy group and an aryl group is more preferable.

In the present invention, the substituent having a branched structure does not need to be a substituent having a molecular weight of 160 or higher or a substituent having 12 or more carbon atoms, but is preferably a substituent having a molecular weight of 160 or higher or a substituent having 12 or more carbon atoms from the viewpoints of the selectivity and the phase separation rate of the metal extractant.

In addition, the kind of the substituent is not particularly limited. As the combination of the substituents that can be used as R¹ and R², from the viewpoints of the selectivity and the phase separation rate of the metal extractant, a combination of single substituents or a combination of a single substituent and a complex substituent is preferable.

In the combination of single substituents, a combination of the same (kind of) substituents may be used, or a combination of different (kinds of) substituents may be used. Examples of the combination of the same substituents include a combination of alkyl groups, a combination of alkenyl groups, a combination of alkynyl groups, a combination of alkoxy groups, and a combination of alkylthio groups. In the combination of the same substituents, carbon chains of single substituents to be combined may be the same as or different from each other, and are preferably branched chains. In addition, the numbers of carbon atoms in the single substituents to be combined may be the same as or different from each other.

On the other hand, as the combination of different substituents, a combination where one substituent is an alkoxy group or an alkylthio group is preferable, from the viewpoints of the selectivity and the phase separation rate of the metal extractant, a combination of an alkyl group, an alkenyl group, or an alkynyl group and an alkoxy group or an alkylthio group is more preferable, and a combination of an alkyl group and an alkoxy group is still more preferable. In the combination of different substituents, a carbon chain of an alkyl group, an alkenyl group, or an alkynyl group and a carbon chain of an alkyl group forming an alkoxy group or an alkylthio group may be the same as or different from each other, but are preferably branched chains. In addition, the number of carbon atoms in the alkyl group, the alkenyl group, or the alkynyl group and the number of carbon atoms in the alkyl group forming the alkoxy group or the alkylthio group may be the same as or different from each other. In the preferable combination of different substituents, from the viewpoint that the selectivity and the phase separation rate of the metal extractant can be simultaneously improved at a higher level, it is preferable that the molecular weight and the number of carbon atoms in the alkoxy group and the alkylthio group are more than those of the alkyl group, the alkenyl group, and the alkynyl group, and it is more preferable that the alkoxy group and the alkylthio group correspond to the substituent having a molecular weight of 160 or higher.

As the combination of the single substituent and the complex substituent, from the viewpoints of the selectivity and the phase separation rate of the metal extractant, a combination of an alkyl group, an alkenyl group, an alkynyl group, an alkoxy group, or an alkylthio group and a complex substituent including a ring structure is preferable, and a combination of an alkyl group, an alkoxy group, or an alkylthio group and a complex substituent including a combination of an alkoxy group and an aryl group is more preferable.

As the combination of the substituent that can be used as R¹ and the substituent that can be used as R², among the above-described combinations, a combination of alkoxy groups, a combination of an alkyl group and an alkoxy group, or a combination of an alkoxy group and an alkoxyaryl group is still more preferable.

In the compound represented by Formula (I), each of the substituents that can be used as R¹ and R² can be appropriately selected from the above-described substituents. Focusing on the molecular structure and the number of carbon atoms in the substituent, from the viewpoint that the selectivity and the phase separation rate of the metal extractant can be simultaneously improved at a high level, a form where at least one of R¹ or R² represents a substituent including a hydrocarbon group having 3 or more branched carbon atoms or a substituent including a hydrocarbon group having 9 or more carbon atoms is preferable, and a form where both of R¹ and R² represent a substituent including a hydrocarbon group having 3 or more branched carbon atoms or a substituent including a hydrocarbon group having 9 or more carbon atoms is more preferable.

In the present invention, the meaning of a substituent including a specific group or ring structure includes a substituent consisting of only a specific group or ring structure and a substituent including a specific group or ring structure and other groups, atoms, or structures (the details will be described below). For example, the meaning of the substituent including a hydrocarbon group includes a substituent consisting of only a hydrocarbon group (a hydrocarbon group itself) and a hydrocarbon oxy group consisting of the hydrocarbon group and, for example, an oxygen atom.

The hydrocarbon group having 3 or more branched carbon atoms is not particularly limited, and examples thereof include an alkyl group, an alkenyl group, or an alkynyl group having a branched structure that has 3 or more branched carbon atoms (tertiary carbon atoms). The number of branched carbon atoms present in the hydrocarbon group is not particularly limited as long as it is 3 or more. For example, the number of branched carbon atoms can be 3 to 8 and, from the viewpoints of the selectivity and the phase separation rate of the metal extractant, is preferably 3 to 6 and more preferably 4 to 6. The molecular weight and the number of carbon atoms in the hydrocarbon group having 3 or more branched carbon atoms are not particularly limited, and are appropriately selected in the above-described range. It is preferable that the molecular weight is 160 or higher and the number of carbon atoms is 12 or more. As the hydrocarbon group having 3 or more branched carbon atoms, an alkyl group having a branched structure that has 3 or more branched carbon atoms is preferable, and examples thereof include 2,5,7,7-tetramethyloctane and 2-(1,3,3-trimethyl-1-butyl)-5,7,7-trimethyl-octane.

The hydrocarbon group having 9 or more carbon atoms is not particularly limited. Among the above-described hydrocarbon groups, an alkyl group, an alkenyl group, an alkynyl group is preferable, and an alkyl group is more preferable. The molecular weight of the hydrocarbon group having 9 or more carbon atoms is not particularly limited as long as it is 127 or higher, and is preferably appropriately selected in the above-described range.

The hydrocarbon group having 9 or more carbon atoms may be a straight chain or a branched chain and is preferably a branched chain. In a case where the hydrocarbon group having 9 or more carbon atoms is a branched chain, the number of branched carbon atoms is not particularly limited as long as it is 1 or more, and examples thereof include an aspect where the number of branched carbon atoms is 1 or 2 and an aspect where the number of branched carbon atoms is 3 or more. In the aspect where the number of branched carbon atoms is 3 or more, from the viewpoints of the selectivity and the phase separation rate of the metal extractant, the number of branched carbon atoms is preferably the same as the number of branched carbon atoms in the hydrocarbon group having 3 or more branched carbon atoms.

As the hydrocarbon group having 9 or more carbon atoms, an alkyl group having 9 or more carbon atoms is preferable, and a branched alkyl group having 1 or more branched carbon atoms and having 9 or more carbon atoms is more preferable. Examples of the linear alkyl group having 9 or more carbon atoms include an n-nonyl group, an n-decyl group, an n-dodecyl group, an n-tetradecyl group, and an n-hexadecyl group. Examples of the alkyl group having 9 or more carbon atoms and having one or two branched carbon atoms include 1-ethyl-1-methylhexane, 8-methylnonane, 2-butyloctane, 2-hexyldecane, 2-ethyldecane, 2-octyldecane, 2-hexyldodecane, 2-octyldodecane, and 2-decyltetradecane. Examples of the alkyl group having 9 or more carbon atoms and having 3 or more branched carbon atoms include 2-(1,3,3-trimethyl-1-butyl)-5,7,7-trimethyl-octane.

Atoms, groups, or the like other than the hydrocarbon group forming the substituent including a hydrocarbon group are not particularly limited, and examples thereof include the groups (substituents other than the hydrocarbon group) selected from the substituent GZ described below and the above-described heteroatoms. Among these, a group including the above-described hydrocarbon group and an oxygen atom or a sulfur atom is preferable, and specific examples thereof include an alkoxy group and an alkylthio group.

In the present form, the combination of the substituent that can be used as R¹ and the substituent that can be used as R², any one of the substituents may be a substituent including a hydrocarbon group having 3 or more branched carbon atoms or a substituent including a hydrocarbon group having 9 or more carbon atoms, and this substituent and a substituent that does not correspond to any of the substituent including a hydrocarbon group having 3 or more branched carbon atoms and the hydrocarbon group having 9 or more carbon atoms among the substituents that can be used as R¹ and R² can be appropriately combined. The substituent that does not correspond to any of the substituents is not uniquely determined depending on the substituent including a hydrocarbon group having 3 or more branched carbon atoms or the substituent including a hydrocarbon group having 9 or more carbon atoms, and examples thereof include a linear alkyl group having 8 carbon atoms.

In Formula (I), Y^{P} represents an oxygen atom or a sulfur atom and preferably an oxygen atom.

In Formula (I), Z represents a hydroxy group, a sulfanyl group (mercapto group), or a hydroxyaryl group. As a preferable first aspect of the group that can be used as Z, a hydroxy group or a sulfanyl group is preferable, and a hydroxy group is more preferable. On the other hand, as a preferable second aspect of the group that can be used as Z, a hydroxy group or a hydroxyaryl group is preferable.

The hydroxyaryl group that can be used as Z may be an aryl group having at least one hydroxy group. Examples of the aryl group include an aryl group in the substituent GZ described below, and a phenyl group is preferable. The number of hydroxy groups introduced into the aryl group is not particularly limited, and can be 1 to 4 and is preferably 1 or 2. The position of the aryl group where a hydroxy group is introduced is not particularly limited, and can be appropriately set with respect to the bonding position of the aryl group. For example, in a case where the aryl group is a phenyl group, the introduction position may be any of the 2-, ..., or 4-position, and is preferably the 2-position with respect to the bonding position. Examples of the hydroxyaryl group include a 2-, 3-, or 4-hydroxyphenyl group, a dihydroxyphenyl group, a trihydroxyphenyl group, and a tetrahydroxyphenyl group. From the viewpoints of the selectivity and the phase separation rate of the metal extractant, a 2-, 3-, or 4-hydroxyphenyl group is preferable.

Each of the groups that can be used as Z may form a salt. A cation that forms a salt is not particularly limited, and examples thereof include a metal cation, in particular, a metal cation belonging to Group 1 or Group 2, and an organic cation. The organic cation is not particularly limited, and examples thereof include an ammonium cation and an alkylammonium cation.

In Formula (I), L represents a single bond. In a case where n represents 2 or more, L interposed between two adjacent P's represents a single bond or a linking group.

The linking group that can be used as L is not particularly limited, and examples thereof include an alkylene group (having preferably 1 to 12 carbon atoms, more preferably 1 to 6 carbon atoms, and still more preferably 1 to 4 carbon atoms), an alkenylene group (having preferably 2 to 6 carbon atoms and more preferably 2 or 3 carbon atoms), an arylene group (having preferably 6 to 24 carbon atoms and more preferably 6 to 10 carbon atoms), an oxygen atom, a sulfur atom, an imino group (-NR^{N}-: R^{N} represents a hydrogen atom, an alkyl group having 1 to 6 carbon atoms, or an aryl group having 6 to 10 carbon atoms), a carbonyl group, and a group including a combination thereof. As the linking group an alkylene group, an arylene group, a carbonyl group, an oxygen atom, a sulfur atom, an imino group, or a group including a combination thereof is preferable, and an alkylene group is more preferable. Here, the alkylene group and the alkenylene group may be a straight chain, a branched chain, or a cyclic chain, and are preferably a straight chain or a branched chain.

In the group including the combination, the number of groups, linking groups, or atoms to be combined is not particularly limited and, for example, can be 2 to 15 and is preferably 2 to 10 and more preferably 2 to 5. In addition, the number of kinds of groups, linking groups, or atoms to be combined is not particularly limited and, for example, can be 2 or more and is preferably 2 or 3.

The number of linking atoms in the linking group is not particularly limited, and is preferably 15 or less, more preferably 10 or less, still more preferably 6 or less, and still more preferably 4 or less. The lower limit is 1 or more. The number of linking atoms refers to the minimum number of atoms that connect two adjacent P's. The number of atoms (number of constituent atoms) forming the linking group is not particularly limited. For example, the number of atoms forming the linking group can be 3 to 30 and is preferably 3 to 20 and more preferably 3 to 10. For example, in a case where the linking group is -CH₂-CH₂-, the number of atoms forming the molecular structure is 6, and the number of linking atoms is 2.

In a case where the compound represented by Formula (I) has two or more linking groups, at least one linking group may satisfy the number of linking atoms and the number of constituent atoms, and it is preferable that all the linking groups satisfy the number of linking atoms and the number of constituent atoms.

In Formula (I), n represents an integer of 1 to 6.

As a preferable first aspect of n, it is preferable that n represents an integer of 1 to 3.

As a preferable second aspect of n, it is preferable that n represents an integer of 1 and 3 to 6.

In the first aspect and the second aspect, it is more preferable that n represents 1.

In a case where n represents an integer of 2 to 6, n Y^{P}'s, Z's, and L's may be the same as or different from each other, respectively.

The compound represented by Formula (I) can be formed by appropriately combining R¹, R², Y^{P}, Z, L, and n, and is preferably formed by combining preferable examples of the respective numerals.

Note that the compound represented by Formula (I) may be a basic compound, but it is preferable that the compound represented by Formula (I) corresponds to an acidic compound having at least one active hydrogen atom, that is, an acidic metal extractant from the viewpoint of exhibiting excellent selectivity and high phase separation rate as the metal extractant. Examples of the active hydrogen atom in the compound include a hydroxy group (including a phenolic hydroxy group) and a hydrogen atom in a sulfanyl group. The active hydrogen atom may be present in any of R¹, R², or L, and is preferably present in Z. The number of hydroxy groups present in the compound may be 1 or more, and can be 1 to 4, and is preferably 1 or 2. In the compound represented by Formula (I), a group including an active hydrogen atom may form a salt such that the active hydrogen atom is converted into a cation. This cation is not particularly limited, and examples thereof include cations described in Z.

The compound represented by Formula (I) may function as a multidentate ligand for specific metal ions (metal ions to be extracted) present in the water phase, but preferably functions as a monodentate ligand from the viewpoints of selectivity and phase separation rate.

The molecular weight of the compound represented by Formula (I) is not particularly limited, and can be, for example, 350 to 50,000. From the viewpoint of, for example, solubility in the oil phase, the molecular weight is preferably 400 to 10,000 and more preferably 500 to 1,000. In the present invention, in a case where the compound represented by Formula (I) has a polymer chain, unless specified otherwise, the molecular weight of the oligomer refers to the number-average molecular weight in terms of standard polystyrene measured by gel permeation chromatography (GPC).

### -Measurement of Molecular Weight-

Regarding a method of measuring the molecular weight of the oligomer, basically, a value measured using a method under the following condition 1 or condition 2 (preferred) is used. In this case, an appropriate eluent may be selected and used depending on the kind of the oligomer.

### (Condition 1)

Column: Connect two TOSOH TSKgel Super AWM-H (product name, manufactured by Tosoh Corporation)
Carrier: 10 mM LiBr/N-methylpyrrolidone
Measurement temperature: 40°C
Carrier flow rate: 1.0 ml/min
Sample concentration: 0.1% by mass
Detector: refractive index (RI) detector

### (Condition 2)

Column: A column obtained by connecting TOSOH TSKgel Super HZM-H, TOSOH TSKgel Super HZ4000, and TOSOH TSKgel Super HZ2000 (all of which are trade names, manufactured by Tosoh Corporation)
Carrier: tetrahydrofuran
Measurement temperature: 40°C
Carrier flow rate: 1.0 ml/min
Sample concentration: 0.1% by mass
Detector: refractive index (RI) detector

The pKa of the compound represented by Formula (I) is not particularly limited, an appropriate value can be adopted, and a value of 0.1 to 12 is preferable. The pKa can be measured using a neutralization titration method.

The compound represented by Formula (I) may include a substituent, and examples of the substituent that may be included in the compound include groups selected from the substituent GZ described below.

The compound represented by Formula (I) can be synthesized with reference to a well-known synthesis method, for example, a synthesis method described in JP2012-184503A or a synthesis method described in Examples described below.

Specific examples of the compound represented by Formula (I) include the following compounds in addition to compounds synthesized in Examples, but the present invention is not limited thereto.

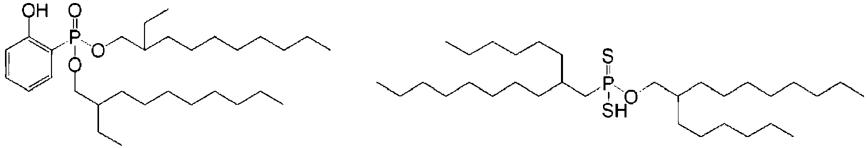

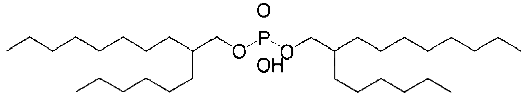

### -Substituent GZ-

The substituent GZ includes: an alkyl group (preferably an alkyl group having 1 to 20 carbon atoms, for example, methyl, ethyl, isopropyl, t-butyl, pentyl, heptyl, 1-ethylheptyl, benzyl, 2-ethoxyethyl, or 1-carboxymethyl); an alkenyl group (preferably an alkenyl group having 2 to 20 carbon atoms, for example, vinyl, allyl, or oleyl); an alkynyl group (preferably an alkynyl group having 2 to 20 carbon atoms, for example, ethynyl, butadiynyl, or phenyl-ethynyl); a cycloalkyl group (preferably a cycloalkyl group having 3 to 20 carbon atoms; for example, cyclopropyl, cyclopentyl, cyclohexyl, or 4-methylcyclohexyl; the meaning of an alkyl group described in the present invention typically includes a cycloalkyl group but, here, an alkyl group and a cycloalkyl group are distinguished from each other); an aryl group (preferably an aryl group having 6 to 26 carbon atoms, for example, phenyl, 1-naphthyl, 4-methoxyphenyl, 2-chlorophenyl, or 3-methylphenyl); an aralkyl group (preferably an aralkyl group having 7 to 23 carbon atoms, for example, benzyl or phenethyl); a heterocyclic group (preferably a heterocyclic group having 2 to 20 carbon atoms and more preferably a 5- or 6-membered heterocyclic group having at least one oxygen atom, sulfur atom, or nitrogen atom. The heterocyclic group includes an aromatic heterocyclic group and an aliphatic heterocyclic group. For example, a tetrahydropyran ring group, a tetrahydrofuran ring group, 2-pyridyl, 4-pyridyl, 2-imidazolyl, 2-benzimidazolyl, 2-thiazolyl, 2-oxazolyl, or a pyrrolidone group); an alkoxy group (preferably an alkoxy group having 1 to 20 carbon atoms, for example, methoxy, ethoxy, isopropyloxy, or benzyloxy); an aryloxy group (preferably an aryloxy group having 6 to 26 carbon atoms, for example, phenoxy, 1-naphthyloxy, 3-methylphenoxy, or 4-methoxyphenoxy); a heterocyclic oxy group (a group in which an -O- group is bonded to the above-described heterocyclic group); an alkoxycarbonyl group (preferably an alkoxycarbonyl group having 2 to 20 carbon atoms, for example, ethoxycarbonyl, 2-ethylhexyloxycarbonyl, or dodecyloxycarbonyl); an aryloxycarbonyl group (preferably an aryloxycarbonyl group having 7 to 26 carbon atoms, for example, phenoxycarbonyl, 1-naphthyloxycarbonyl, 3-methylphenoxycarbonyl, or 4-methoxyphenoxycarbonyl); a heterocyclic oxycarbonyl group (a group in which an -O-CO-group is bonded to the above-described heterocyclic group); an amino group (preferably an amino group having 0 to 20 carbon atoms, an alkylamino group, or an arylamino group, for example, amino (-NH₂), N,N-dimethylamino, N,N-diethylamino, N-ethylamino, or anilino); a sulfamoyl group (preferably a sulfamoyl group having 0 to 20 carbon atoms, for example, N,N-dimethylsulfamoyl or N-phenylsufamoyl); an acyl group (an alkylcarbonyl group, an alkenylcarbonyl group, an alkynylcarbonyl group, an arylcarbonyl group, or a heterocyclic carbonyl group, preferably an acyl group having 1 to 20 carbon atoms, for example, acetyl, propionyl, butyryl, octanoyl, hexadecanoyl, acryloyl, methacryloyl, crotonoyl, benzoyl, naphthoyl, or nicotinoyl); an acyloxy group (an alkylcarbonyloxy group, an alkenylcarbonyloxy group, an alkynylcarbonyloxy group, or a heterocyclic carbonyloxy group, preferably an acyloxy group having 1 to 20 carbon atoms, for example, acetyloxy, propionyloxy, butyryloxy, octanoyloxy, hexadecanoyloxy, acryloyloxy, methacryloyloxy, crotonoyloxy, or nicotinoyloxy); an aryloyloxy group (preferably an aryloyloxy group having 7 to 23 carbon atoms, for example, benzoyloxy or naphthoyloxy); a carbamoyl group (preferably a carbamoyl group having 1 to 20 carbon atoms, for example, N,N-dimethylcarbamoyl or N-phenylcarbamoyl); an acylamino group (preferably an acylamino group having 1 to 20 carbon atoms, for example, acetylamino or benzoylamino); an alkylthio group (preferably an alkylthio group having 1 to 20 carbon atoms, for example, methylthio, ethylthio, isopropylthio, or benzylthio); an arylthio group (preferably an arylthio group having 6 to 26 carbon atoms, for example, phenylthio, 1-naphthylthio, 3-methylphenylthio, or 4-methoxyphenylthio); a heterocyclic thio group (a group in which an -S- group is bonded to the above-described heterocyclic group); an alkylsulfonyl group (preferably an alkylsulfonyl group having 1 to 20 carbon atoms, for example, methylsulfonyl or ethylsulfonyl); an arylsulfonyl group (preferably an arylsulfonyl group having 6 to 22 carbon atoms, for example, benzenesulfonyl); an alkylsilyl group (preferably an alkylsilyl group having 1 to 20 carbon atoms, for example, monomethylsilyl, dimethylsilyl, trimethylsilyl, or triethylsilyl); an arylsilyl group (preferably an arylsilyl group having 6 to 42 carbon atoms, for example, triphenylsilyl); an alkoxysilyl group (preferably an alkoxysilyl group having 1 to 20 carbon atoms, for example, monomethoxysilyl, dimethoxysilyl, trimethoxysilyl, or triethoxysilyl); an aryloxysilyl group (preferably an aryloxysilyl group having 6 to 42 carbon atoms, for example, triphenyloxysilyl); a phosphoryl group (preferably a phosphate group having 0 to 20 carbon atoms, for example, -OP(=O)(R^{P})₂); a phosphonyl group (preferably a phosphonyl group having 0 to 20 carbon atoms, for example, -P(=O)(R^{P})₂); a phosphinyl group (preferably a phosphinyl group having 0 to 20 carbon atoms, for example, -P(R^{P})₂); a phosphonate group (preferably a phosphonate group having 0 to 20 carbon atoms, for example, -PO(OR^{P})₂); a sulfo group (a sulfonate group), a carboxy group, a hydroxy group, a sulfanyl group, a cyano group, and a halogen atom (for example, a fluorine atom, a chlorine atom, a bromine atom, or an iodine atom).

R^{P} represents a hydrogen atom or a substituent (preferably a group selected from the substituent GZ).

In addition, each group exemplified in the substituent GZ may be further substituted with the substituent GZ.

The alkyl group, the alkylene group, the alkenyl group, the alkenylene group, the alkynyl group, the alkynylene group, and/or the like may be cyclic or chained, may be linear or branched.

### [Separation Recovery Method of Metal Ions]

A separation recovery method of metal ions according to an embodiment of the present invention (hereinafter, also referred to as the separation recovery method according to the embodiment of the present invention) is a method of mixing a water phase including plural kinds of metal ions and an oil phase including the metal extractant according to the embodiment of the present invention. As a result, the specific metal ions to which the metal extractant according to the embodiment of the present invention is coordinated can be moved (extracted) to be separated and recovered from the water phase to the oil phase with high selectivity and, preferably, high recovery rate. Here, the metal ions to be extracted to the oil phase may be a part of the plural kinds of metal ions in the water phase or may be all kinds of different-group metal ions in the water phase. In the separation recovery method according to the embodiment of the present invention, as ions of a valuable metal element, one kind of metal ions can be extracted to the oil phase with high selectivity and, preferably, high recovery rate. In this case, one kind of metal ions among two or more kinds of different-group metal ions, for example, two or more kinds of different-group metal ions belonging to Group 1 to Group 14 in the periodic table can be extracted to the oil phase with high selectivity and, preferably, high recovery rate. In particular, in the separation recovery method according to the embodiment of the present invention, one kind of metal ions among two or more kinds of different-group metal ions belonging to Group 9 to Group 12 in the periodic table, particularly desirably, cobalt ions and nickel ions that are same-period different-group metal ions can be extracted to the oil phase with high selectivity and, preferably, high recovery rate.

The present inventors found that the metal extractant according to the embodiment of the present invention has the characteristics and function in which, while extracting two or more kinds of metal ions among plural kinds of metal ions (groups) present in the water phase to the oil phase together in the wet extraction method, one kind of metal ions can be extracted to the oil phase with high selectivity and, preferably, high recovery rate, and applies the separation recovery method according to the embodiment of the present invention to the new use where two or more kinds of metal ions, in particular, different-group metal ions are separated and recovered.

### <Water Phase>

Water formed in the water phase is not particularly limited, and (super) pure water, ion exchange water, or the like can be used.

The metal ions in the water phase may include metal ions of at least two metal elements belonging to Group 1 to Group 14 in the periodic table, preferably includes at least two kinds of metal ions belonging to Group 3 to Group 14, and may include metal ions belonging to Group 15 to Group 17.

In the present invention, it is preferable that two or more kinds of metal ions belonging to Group 1 to Group 14 are included, it is more preferable that two or more kinds of metal ions belonging to Group 3 to Group 14 are included, and it is still more preferable that ions of at least one kind of a transition metal element (transition metal element belonging to Group 3 to Group 12) are included. In an aspect including at least one transition metal element, it is preferable that two or more kinds of metal ions belonging to Group 4 to Group 12 are included, it is more preferable that two or more kinds of metal ions belonging to Group 4 to Group 10 are included, it is still more preferable that two or more kinds of metal ions belonging to Group 8 to Group 12 are included, it is still more preferable that two or more kinds of metal ions belonging to Group 9 to Group 12 are included, and it is most preferable that two or more kinds of metal ions belonging to Group 9 and Group 10 are included. The metal ions belonging to each of the groups are not particularly limited, metal ions belonging to the fourth to sixth periods in the periodic table are preferable, and metal ions belonging to the fourth period or the fifth period are more preferable. In addition, the number of kinds of the metal ions is not particularly limited as long as it is 2 or more. For example, the number of kinds of the metal ions can be 2 to 15 and is preferably 2 to 8 and more preferably 2 to 5.

A combination of the plurality of metal ions is not particularly limited, and examples of the combination of groups include a combination including Group 9 and Group 10, a combination including Group 9 and Group 12, a combination including Group 9 and Group 11, a combination including Group 9, Group 10, and Group 12, a combination including Group 4 and Group 9, a combination including Group 7, Group 9, and Group 10, and a combination of Group 7, Group 8, Group 9, and Group 10.

In the present invention, the number of kinds of metal ions belonging to each of the groups may be two or more but, from the viewpoint of exhibiting high selectivity, is preferably one.

Specific examples of the combination of the metal ions include a combination including Co and Ni, a combination including Co and Zn, a combination including Co and Cu, a combination including Rh and Ni, a combination including Zr and Rh, a combination including Mn, Co, and Ni and a combination of Mn, Fe, Co, and Ni.

The plural kinds of metal ions in the water phase may include the same group of metal ions, or may include different-group metal ions. The number of kinds of the different-group metal ions in the water phase may be 2 or more and, for example, is preferably 2 to 4 and more preferably 2.

The metal element belonging to each of the groups is not particularly limited, and an appropriate atom can be used. Examples of the metal element belonging to each of the groups are as follows.

Preferable examples of a metal element belonging to Group 1 include Li, Na, Rb, and Cs.

Preferable examples of a metal element belonging to Group 2 include Mg, Ca, Sr, and Ba.

Preferable examples of a metal element belonging to Group 3 include Sc and Y.

Preferable examples of a metal element belonging to Group 4 include Ti, Zr, and Hf.

Preferable examples of a metal element belonging to Group 5 include V, Nb, and Ta.

Preferable examples of a metal element belonging to Group 6 include Cr, Mo, and W.

Preferable examples of a metal element belonging to Group 7 include Mn and Tc.

Preferable examples of a metal element belonging to Group 8 include Fe, Ru, and Os.

Preferable examples of a metal element belonging to Group 9 include Co, Rh, and Ir.

Preferable examples of a metal element belonging to Group 10 include Ni, Pd, and Pt.

Preferable examples of a metal element belonging to Group 11 include Cu, Ag, and Au.

Preferable examples of a metal element belonging to Group 12 include Zn, Cd, and Hg.

Preferable examples of a metal element belonging to Group 13 include Al, Ga, In, and Tl.

Preferable examples of a metal element belonging to Group 14 include Ga, Sn, and Pb.

Preferable examples of a metal element belonging to Group 15 include Sb and Bi.

A metal element belonging to Group 16 is not particularly limited, and preferable examples thereof include Te.

The plural kinds of metal ions can be appropriately prepared and, for example, various metal salts (salts of typical elements with inorganic acids such as nitric acid or sulfuric acid or organic acids such as acetic acid), a mixture of mined metals (ion), a recovery from metal waste, other waste such as a metal recovery from a waste battery (LiB), or a mixture thereof can be used. Examples of the metal recovery from the waste LiB include recoveries obtained using a well-known method such as a wet process or electrolysis.

A total content of the plural kinds of metal ions in the water phase is not particularly limited and is appropriately set. For example, the total content can be 1,000 to 1,000,000 mass ppm and is preferably 1,000 to 100,000 mass ppm, more preferably 1,000 to 80,000 mass ppm, and still more preferably 2,000 to 60,000 mass ppm.

A total content of the metal ions belonging to Group 9 to Group 12 among the metal ions is not particularly limited and is appropriately set. For example, the total content can be 1,000 to 80,000 mass ppm and is preferably 1,000 to 60,000 mass ppm and more preferably 2,000 to 60,000 mass ppm.

A total content of the metal ions belonging to Group 3 to Group 7 and Group 13 to Group 16 among the metal ions is not particularly limited and is appropriately set. For example, the total content can be 1,000 to 60,000 mass ppm and is preferably 1,000 to 30,000 mass ppm.

A content of the metal ions belonging to each of the groups is not particularly limited and is appropriately set. For example, the content can be 1,000 to 60,000 mass ppm and is preferably 1,000 to 50,000 mass ppm and more preferably 2,000 to 30,000 mass ppm. In a case where two or more kinds of metal ions belonging to each of the groups are present, the content of the metal ions belonging to each of the groups is the total content.

In the present invention, in a case where the water phase includes different-group metal ions, the content of the metal ions belonging to one group may be more than or less than a content of the metal ions belonging to another group. In the separation recovery method according to the embodiment of the present invention, the metal ions can be separated and recovered with high selectivity. Therefore, the contents of the metal ions belonging to different groups do not need to be set at a specific ratio. For example, a mass ratio of the content of metal ions belonging to a specific group (for example, metal ions extracted in the maximum amount) to the content of metal ions belonging to another group (for example, metal ions other than the metal ions extracted in the maximum amount (including metal ions that are not extracted) [the content of the metal ions belonging to the specific group:the content of the metal ions belonging to the other group] can be, for example, 100:1 to 10,000 and is preferably 100:10 to 5,000, more preferably 100:50 to 1,000, and still more preferably 100:70 to 250.

The pH of the water phase is not particularly limited and is appropriately set. For example, the pH of the water phase is preferably 0.1 to 10 and more preferably 2.0 to 9.0 in consideration of the solubility of the metal ions, the formation of complex ions, and the like.

The pH of the water phase can be adjusted, for example, using an acid or an alkali. As the acid, a well-known acid can be used without any particular limitation, and examples thereof include an inorganic acid such as sulfuric acid, hydrochloric acid, nitric acid, or phosphoric acid and an organic acid such as formic acid, acetic acid, oxalic acid, organic phosphoric acid, or organic sulfonic acid. As the alkali, a well-known alkali can be used without any particular limitation, and examples thereof include an inorganic alkali and an organic alkali. Among these, an inorganic alkali is preferable. Examples of the inorganic alkali include a hydroxide of a metal belonging to Group 1 or Group 2, a metal alkali such as a carbonate, ammonia water, and ammonium chloride. Examples of the organic alkali include an organic ammonium salt.

The temperature of the water phase is not particularly limited and can be, for example, 10°C to 60°C.

The water phase may optionally include, for example, a ligand coordinated to metal ions or a compound that generates the ligand.

The water phase can be prepared by dissolving metal ions in water. Preparation conditions of the water phase are not particularly limited. For example, the preparation temperature can be 10°C to 60°C.

The water phase may include a masking agent in addition to the above-described metal ions. As the masking agent, various well-known agents can be used without any particular limitation. Examples of the masking agent include a monodentate ligand such as ammonia or a chelating agent such as dithizone.

### <Oil Phase>

In the separation recovery method according to the embodiment of the present invention, the oil phase (organic phase) including one kind or two or more kinds of the metal extractants according to the embodiment of the present invention is used for the above-described water phase.

The metal extractant according to the embodiment of the present invention exhibits solubility in an organic solvent, is present in the oil phase, is coordinate-bonded to metal ions present in the vicinity of an interface between the water phase and the oil phase, and has a function of moving the metal ions to the oil phase. In the present invention, the solubility in the organic solvent refers to a property in which the metal extractant is soluble in the organic solvent in a content described below.

The organic solvent for forming the oil phase is not particularly limited, and an appropriate organic solvent can be used. Examples of the organic solvent include an alcohol solvent, an ether solvent, a hydrocarbon-based solvent (an aromatic solvent or an aliphatic solvent), and a halogen solvent. In particular, a hydrocarbon-based solvent is preferable, various solvents as components separated from petroleum are more preferable, and hydrocarbon-based solvents of aromatic groups, paraffin, naphthene, kerosine, gasoline, naphtha, heating oil, and light oil are still more preferable.

The content of the metal extractant in the oil phase is appropriately set in consideration of the content of the metal ions, the amount of coordination to the metal ions, and the like. For example, the content in the oil phase can be 20 to 10,000 millimole/L (mM), and is preferably 50 to 1,000 millimole/L and more preferably 100 to 500 millimole/L.

The temperature of the oil phase is not particularly limited and can be, for example, 10°C to 60°C.

The oil phase may include appropriate components in addition to the acidic metal extractant according to the embodiment of the present invention.

The oil phase can be prepared by dissolving the metal extractant in the organic solvent. Preparation conditions of the oil phase are not particularly limited. For example, the preparation temperature can be 10°C to 60°C.

### <Contact and Mixing>

In the separation recovery method according to the embodiment of the present invention, the water phase and the oil phase described above are mixed and left to stand.

In this case, mixing conditions and standing conditions are not particularly limited and can be appropriately set. For example, mixing can be performed using various mixing devices. Examples of a method using the mixing device include a method using a magnetic stirrer (stirrer tip), a method using a mechanical stirrer, and a method using a mixer. Stirring conditions (a stirring rate, a stirring time, and the like) only need to be conditions (conditions where the metal extractant is coordinate-bonded to the metal ions) where the water phase and the oil phase can be mixed, and are appropriately set depending on the combination of the metal ions and the metal extractant, and the mixing temperature, and the mixing device. For example, as a stirring rate, a rotation speed of a magnetic stirrer or the like can be 80 rpm or more and is preferably 100 to 200 rpm. For example, a stirring time is not uniquely determined depending on stirring conditions and the like, and can be, for example, 10 minutes to 24 hours. In the present invention, the water phase and the oil phase can be separated at a high phase separation rate. Therefore, the stirring rate can also be set to a high rate, and the stirring time can be set to be longer. A mixing temperature is not particularly limited, and can be, for example, 10°C to 60°C.

Standing conditions can be appropriately set without any particular limit as long as they are conditions where the water phase and the oil phase can be separated into two layers. A standing time in the wet extraction method is typically set to 10 minutes to 24 hours after stopping the mixing. However, in the present invention, the water phase and the oil phase can be separated at a high phase separation rate. Therefore, the standing time can be set to be shorter than usual to improve the productivity of the wet extraction method. In this case, the standing time can be set to shorter than 5 minutes after stopping the mixing, and is preferably less than 4 minutes. A standing temperature is not particularly limited, and can be, for example, 10°C to 60°C.

During the mixing of the water phase and the oil phase, a mixing ratio between the water phase and the oil phase is appropriately set depending on a metal ion concentration, a concentration of the metal ions, the content (concentration) of the metal extractant, and the like, and is not uniquely determined. For example, in a case where the water phase and the oil phase that satisfy the respective concentrations are mixed, the ratio of the oil phase to 100 mL of the water phase can be 50 to 2,000 mL and is preferably 80 to 1,000 mL and more preferably 80 to 200 mL. On the other hand, focusing on the metal ions present in the water phase, it is preferable that the oil phase is mixed at a ratio of 0.5 to 20 mole times of the metal extractant to the total content (moles) of the metal ions, and it is more preferable that the oil phase is mixed at a ratio of 0.5 to 10 moles of the metal extractant to the total content (moles) of the metal ions. In addition, the content of the metal extractant with respect to the total content of the metal ions to which the metal extractant can be coordinated (also referred to as the mixing amount; a ratio of the number of moles of the metal extractant to the total number of moles of the metal ions: molar ratio) can be, for example, 0.5 to 10.0 equivalents, and is preferably 0.5 to 6.0 equivalents. Here, the metal ions to which the metal extractant can be coordinated refers to metal ions that are coordinated to the metal extractant and are extracted to the oil phase.

During the mixing of the water phase and the oil phase, the pH of the mixing system can be adjusted. Here, the pH that is set for specific metal ions to be extracted is not uniquely determined and is appropriately determined in consideration of the pKa of the metal extractant, the complex formation constants of the metal extractant and the metal ions, the number of metal ions to be coordinated, and the like. The pH of the mixing system is preferably 0.01 to 14, more preferably, for example, 0.1 to 10, from the viewpoints of selectivity and phase separation rate and further recovery rate, still more preferably 0.5 to 7.0, still more preferably 1.0 to 6.5, and most preferably 2.5 to 6.5. In a case where metal ions belonging to Group 9 and metal ions belonging to Group 10 are separated and recovered, the pH of the water phase is most preferably 3.0 to 6.5 in the above-described range.

The preparation of the pH can be performed using the acid or the alkali described above, an aqueous solution thereof, or the like, and one preferable aspect is an aspect where ammonia or an ammonium salt is not used.

In a case where the pH of the mixing system is adjusted during the mixing of the water phase and the oil phase, the mixing of the water phase and the oil phase and the standing after the mixing are performed after adjusting the pH.

In a two-phase separated fluid (a solvent extraction phase or a solvent extraction system) where the water phase and the oil phase are phase-separated that is obtained by mixing the water phase and the oil phase and leaving the mixture to stand, the water phase and the oil phase are phase-separated into layers and present in a state where they are in contact with each other. The metal ions to which the metal extractant is coordinate-bonded among the above-described plural kinds of metal ions are present (moved) in the oil phase.

In addition, the number of kinds of the metal ions extracted to the oil phase is ideally 1 but may also be 2 or more. In this case, for example, the number of kinds of the metal ions can be 2 to 10 and is preferably 2 to 6 and more preferably 2 or 3. The two or more kinds of metal ions extracted to the oil phase among the plural kinds of metal ions are not particularly limited and, for example, are preferably the same as the above-described two or more kinds of different-group metal ions (combination) in the water phase.

In the separation recovery method according to the embodiment of the present invention, using a simple method of mixing the water phase and the oil phase with each other and leaving the mixture to stand, specific metal ions among plural kinds of metal ions can be separated, recovered, and extracted with high selectivity and, preferably, high recovery rate. In particular, while extracting ions of two or more kinds of metal elements, one kind of metal ions can be separated and recovered to an oil phase with high selectivity and, preferably, high recovery rate.

The one kind of metal ions that can be separated and recovered with high selectivity and, preferably, high recovery rate are not uniquely determined depending on the group or the period of the metal ions, the content thereof, the kind of the metal extractant, and the like. For example, in a case where metal ions belonging to Group 9 and metal ions belonging to Group 10 are extracted to the oil phase, the metal ions belonging to Group 9 can be separated and recovered with high selectivity and, preferably, high recovery rate. In particular, in a case where Co ions as metal ions belonging to Group 9 and Ni ions as metal ions belonging to Group 10 are extracted, the Co ions can be separated and recovered with high selectivity and, preferably, high recovery rate. In addition, in a case where metal ions belonging to Group 9 and metal ions belonging to Group 11 are extracted to the oil phase, the metal ions belonging to Group 11 can be separated and recovered with high selectivity and, preferably, high recovery rate. In addition, in a case where metal ions belonging to Group 9, metal ions belonging to Group 10, and metal ions belonging to Group 12 are extracted to the oil phase, the metal ions belonging to Group 10 are not typically extracted, and the metal ions belonging to Group 12 can be separated and recovered with high selectivity and, preferably, high recovery rate.

In the separation recovery method according to the embodiment of the present invention, as described above, one kind or two or more kinds of metal ions among plural kinds of metal ions present in the water phase can be extracted and recovered to the oil phase with high selectivity and, preferably, high recovery rate. In particular, in the separation recovery method according to the embodiment of the present invention, while extracting ions of two or more kinds of metal elements, one kind of metal ions can be separated and recovered to the oil phase with high selectivity and, preferably, high recovery rate. Therefore, by further subjecting the water phase including the two or more kinds of metal ions stripped from the oil phase to the separation recovery method according to the embodiment of the present invention, the selectivity of one kind of metal ions can be further improved without significant deterioration in recovery rate, and thus high-purity metal ions can be recovered with, preferably, high recovery rate.

The separation recovery method according to the embodiment of the present invention can also be a method of extracting two or more kinds of metal ions.

In the separation recovery method according to the embodiment of the present invention, the metal extractant alone can be coordinated to metal ions to extract the metal ion to the oil phase. Therefore, the water phase and the oil phase do not need to include a compound that acts to extract metal ions in cooperation with the metal extractant according to the embodiment of the present invention, such as, a compound that is coordinated to metal ions or a compound that forms a ligand. For example, the water phase and the oil phase do not need to include a well-known metal extractant. In the separation recovery method according to the embodiment of the present invention, typically, the water phase including the specific metal ions as an essential component and the oil phase including the metal extractant according to the embodiment of the present invention as an essential component are used.

The separation recovery method according to the embodiment of the present invention may include steps other than the step of mixing the water phase and the oil phase with each other and leaving the mixture to stand. Examples of the other steps include a step of preliminarily mixing (pre-mixing) the water phase and the oil phase before adjusting the pH, a step of stripping (isolating) metal ions from the oil phase obtained in the step of mixing the water phase and the oil phase with each other and leaving the mixture to stand (step of stripping metal ions from the oil phase to recover a metal extractant), a step of recovering the stripped metal ions as a compound (salt), a step of purifying the stripped metal ions or the compound thereof, a step of purifying the recovered metal extractant, and a step of removing ions of metal elements belonging to Group 1 or Group 2 in the periodic table of elements in advance. As a method of stripping (isolating) the metal ions from the oil phase, a well-known method can be applied without any particular limitation. For example, the different-group metal ions can be stripped by adjusting the liquid phase to be acidic, for example, pH of 2 to 4 using an inorganic acid such as sulfuric acid, hydrochloric acid, or nitric acid. As a method of recovering the stripped metal ions as a compound, a well-known method can be applied without any particular limitation.

The separation recovery method according to the embodiment of the present invention may be performed through a batch process or a continuous process.

A device for performing the separation recovery method according to the embodiment of the present invention is not particularly limited, and a well-known device can be used. Examples of the device include a separating funnel and a mixer settler. In addition, a contact and mixing device including a liquid feeding device such as a flow synthesis system or an emulsion flow system can also be used. As conditions for contact, mixing, and standing in the continuous process, each of the above-described conditions can be applied. The amount of the water phase to be used and circulated can also be set to be more than a mixing ratio between the water layer and the oil phase.

### Examples

Hereinafter, the present invention will be described in more detail based on Examples but is not limited to these examples.

"Parts" and "%" that represent compositions in the following Examples are mass-based unless otherwise specified. In the present invention, "room temperature" refers to 25°C.

### [Preparation and Synthesis of Compounds]

Compounds shown below were synthesized and prepared.

Regarding PC-88A (mono-2-ethylhexyl (2-ethylhexyl)phosphonate) shown below, a commercially available product (manufactured by Tokyo Chemical Industry Co., Ltd.) was used. In addition, regarding VA-10 shown below, a commercially available product (Versatic acid 10, manufactured by Hexion Specialty Chemicals, Inc.) was used.

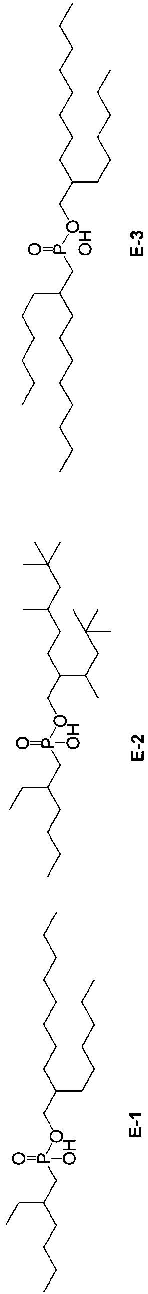

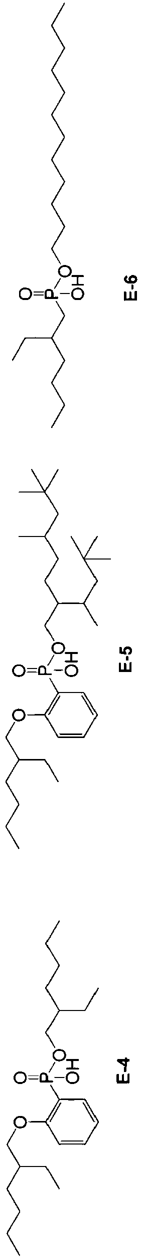

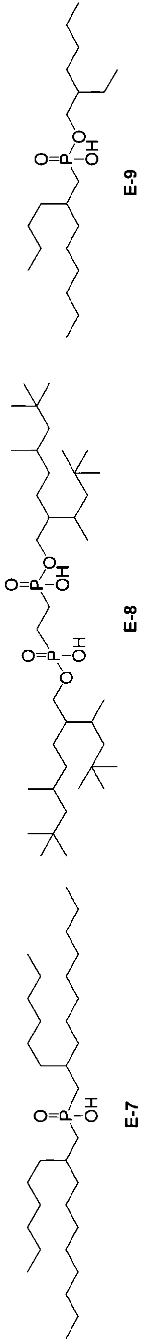

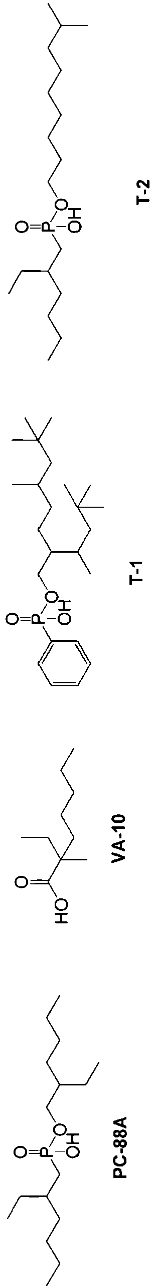

### <Synthesis of Compound E-1>

A compound E-1 was synthesized as follows.

That is, 89 g of diethyl phosphite (manufactured by Tokyo Chemical Industry Co., Ltd.) and 450 g of tetrahydrofuran (manufactured by FUJIFILM Wako Pure Chemical Corporation) were added to a 1 L three-necked eggplant flask, and were stirred well. While cooling the three-necked eggplant flask with ice, 23.2 g of sodium hydroxide (manufactured by FUJIFILM Wako Pure Chemical Corporation) was further added, and the reaction solution was stirred under ice cooling for 20 minutes. Next, the reaction solution was heated and was stirred in a reflux state for 30 minutes. Next, while cooling the three-necked eggplant flask with ice, 70.0 g of 1-bromo-2-ethylhexane (manufactured by Tokyo Chemical Industry Co., Ltd.) was added dropwise to the obtained reaction solution over 20 minutes, and the reaction solution was stirred at an internal temperature of 45°C for 24 hours. After adding 300 g of water to the reaction solution obtained thus far, the reaction solution was extracted with toluene, and the solvent was distilled off under reduced pressure. As a result, 107 g of yellow liquid was obtained.

Next, the obtained yellow liquid and 400 g of dichloromethane (manufactured by FUJIFILM Wako Pure Chemical Corporation) were added to a 1 L three-necked eggplant flask, and were stirred well. 113 g of bromotrimethylsilane (manufactured by Tokyo Chemical Industry Co., Ltd.) was further added to the three-necked eggplant flask, and the reaction solution was stirred at room temperature for 4 hours. After distilling off the solvent from the obtained reaction solution under reduced pressure, 530 g of methanol (manufactured by FUJIFILM Wako Pure Chemical Corporation) was added, and the reaction solution was stirred at an internal temperature of 40°C for 3 hours. After adding 200 mL of a sodium hydroxide aqueous solution (4 mol/L) to the reaction solution obtained thus far, the water layer was cleaned with toluene twice. After adding 65 mL of concentrated hydrochloric acid to the obtained aqueous solution, the reaction solution was extracted with toluene, and the solvent was distilled off under reduced pressure. As a result, 43.6 g of a compound A (yield: 62%, two steps) was obtained.

20.0 g of the compound A, 25.0 g of FINEOXOCOL 1600K (branched C₁₆H₃₃OH, manufactured by Nissan Chemical Corporation), and 120 g of tetrahydrofuran (manufactured by FUJIFILM Wako Pure Chemical Corporation) were added to a 500 mL three-neck flask, and the reaction solution was stirred and heated in a reflux state. A solution where 23.4 g of dicyclohexylcarbodiimide (manufactured by FUJIFILM Wako Pure Chemical Corporation) was dissolved in 120 g of tetrahydrofuran was added dropwise to the reaction solution over 3 hours, and was stirred for 4 hours. The obtained reaction solution was returned to room temperature, white solid was removed by filtration to obtain a filtrate, and the solvent was distilled off from the filtrate under reduced pressure. The obtained crude product was dissolved in toluene and was cleaned with water, and the solvent was distilled off under reduced pressure. As a result, 32.0 g (yield: 74%) of a compound E-1 as a light yellow liquid was obtained.

The compound E-1 synthesized as described above was identified as follows.

That is, the compound E-1 was dissolved in deuterated chloroform, and ¹H-NMR was measured (device: BLUKER 400). The obtained chart is shown in FIG. 1.
δ (ppm): 9.65 (1H, br s), 3.89 (2H, t, J = 5.6 Hz), 1.80-1.21 (36H, m), 0.91-0.86-(12H, m)

In addition, m/z419 obtained from HPLC-MS matched with [M+H⁺] (precise molecular weight of E-1: 418).

As a result, the obtained compound was identified to have the above-described structure represented by E-1.

### <Synthesis of Compounds E-2 to E-6 and E-9>

Each of compounds E-2 to E-6 and E-9 using the same method as that of the synthesis of the compound E-1, except that, during the synthesis of the compound E-1, 1-bromo-2-ethylhexane or FINEOXOCOL 1600K was changed to a halide or an alcohol deriving a group corresponding to R¹ and R² in the chemical formula and Table 1 below.

### <Synthesis of Compound E-7>

30.0 g of FINEOXOCOL 1600K (branched C₁₆H₃₃OH, manufactured by Nissan Chemical Corporation), 49.2 g of carbon tetrabromide (manufactured by FUJIFILM Wako Pure Chemical Corporation), and 160 g of dichloromethane (manufactured by FUJIFILM Wako Pure Chemical Corporation) were added to a 500mL three-necked eggplant flask, and the reaction solution was stirred while being cooled in an ice bath. A solution consisting of 48.7 g of triphenylphosphine (manufactured by FUJIFILM Wako Pure Chemical Corporation) and 130 g of dichloromethane was added dropwise to the obtained reaction solution over 10 minutes. Next, the reaction solution was heated to room temperature and stirred for 2 hours. Next, a 4M sodium hydroxide solution was added to this solution, the reaction solution was extracted with dichloromethane, and the solvent was distilled off under reduced pressure. As a result, the product (branched C₁₆H₃₃Br) was obtained as light yellow liquid (yield: 90%).

1.9 g of magnesium (manufactured by FUJIFILM Wako Pure Chemical Corporation) and 100 g of diethyl ether were added to a 300 mL three-necked eggplant flask, and the reaction solution was stirred at room temperature. 22.0 g of the above-described product was added dropwise to the reaction solution to form a Grignard reagent. Next, 5.0 g of dibutyl phosphite was added while maintaining the temperature of the reaction solution at 15°C or lower, and the reaction solution was heated and was stirred in a reflux state for 5 minutes. While cooling the obtained reaction solution in an ice bath, 10% sulfuric acid was added dropwise, the organic layer was cleaned with a 15% sodium carbonate aqueous solution, and the solvent was distilled off under reduced pressure. The obtained crude product was purified by column chromatography, and phosphorous acid including two branched C₁₆H₃₃ groups substituted with two hydroxyl groups, respectively, was obtained as a colorless transparent liquid (yield: 84%).

78 g of hydrogen peroxide water (manufactured by FUJIFILM Wako Pure Chemical Corporation) and 10.0 g of the above-described phosphorous acid were added to a 200 mL three-necked eggplant flask, and the reaction solution was stirred at room temperature. Next, the reaction solution was heated to 65°C and stirred for 24 hours. After adding 100 g of a saturated sodium thiosulfate aqueous solution, the reaction solution was extracted with toluene, and the solvent was distilled off under reduced pressure. As a result, a compound E-7 was obtained as a colorless transparent liquid (yield: 96%).

### <Synthesis of Compound E-8>

17.4 g of ethylenediphosphonic acid (manufactured by Tokyo Chemical Industry Co., Ltd.), 49.5 g of FINEOXOCOL 180 (branched C₁₈H₃₇OH, manufactured by Nissan Chemical Corporation), and 200 g of tetrahydrofuran (manufactured by FUJIFILM Wako Pure Chemical Corporation) were added to a 1 L three-necked eggplant flask, and the reaction solution was stirred in a reflux state and dissolved.

Separately from this process, 41.6 g of N,N'-dicyclohexylcarbodiimide (DCC, manufactured by FUJIFILM Wako Pure Chemical Corporation) and 180 g of tetrahydrofuran were put into and mixed in a 500 mL measuring cylinder to prepare a DCC solution.

This DCC solution was added dropwise to the above-described three-necked eggplant flask for 3 hours, and was further stirred for 5 hours after completion of the dropwise addition. The obtained solution was allowed to cool at room temperature, the precipitated white crystals were removed by filtration, and the filtrate was cleaned with toluene. The solvent was distilled off under a reduced pressure from the filtrate to obtain a compound E-8 as a colorless transparent liquid (yield: 98%).

### <Synthesis of Compound T-1>

A compound T-1 was synthesized with reference to Example 1 of JP2012-184503A.

### <Synthesis of Compound T-2>

A compound T-2 was synthesized using the same method as that of the compound E-1, except that, during the synthesis of the compound E-1, FINEOXOCOL 1600K was changed to isodecyl alcohol. The obtained compound T-2 was identified using the same method as that of the compound E-1.

Each of the compounds synthesized as described above was identified using the same method as that of the compound E-1.

Regarding the synthesized or prepared compound, the molecular weight of the compound and the molecular weight and the number of carbon atoms in the each of substituents corresponding to R¹ and R² are shown in Table 1. In Table 1, the left substituent is assumed as R¹ and the right substituent is assumed as R² with respect to the "P" atom in the basic structure of the chemical formula.

**[Table 1]**

| No. | Molecular Weight of Compound | R¹ | | R² | |
|---|---|---|---|---|---|
| | | Total Number of Carbon Atoms | Molecular Weight | Total Number of Carbon Atoms | Molecula r Weight |
| E-1 | 419 | 8 | 113 | 16 | 241 |
| E-2 | 447 | 8 | 113 | 18 | 270 |
| E-3 | 531 | 16 | 225 | 16 | 241 |
| E-4 | 399 | 14 | 205 | 8 | 129 |
| E-5 | 539 | 14 | 205 | 18 | 270 |
| E-6 | 363 | 8 | 113 | 12 | 185 |
| E-7 | 515 | 16 | 225 | 16 | 225 |
| E-8 | 695 | 18 | 270 | 18 | 270 |
| E-9 | 363 | 12 | 169 | 8 | 129 |
| PC-88A | 306 | 8 | 113 | 8 | 129 |
| VA-10 | 172 | - | - | 9 | 127 |
| T-1 | 411 | 6 | 77 | 18 | 270 |
| T-2 | 335 | 8 | 113 | 10 | 157 |

### [Preparation of Metal Ion-Containing Aqueous Solution]

81.1 g of cobalt (II) sulfate heptahydrate (manufactured by FUJIFILM Wako Pure Chemicals Corporation) and 81.3 g of nickel (II) sulfate heptahydrate (manufactured by FUJIFILM Wako Pure Chemicals Corporation) were added to a 1 L measuring flask, were diluted with ultrapure water, and were stirred and dissolved at 40°C to prepare a metal ion-containing aqueous solution (W1).

In addition, sulfates of a combination of metal ions shown in the column "Metal Ion Concentration in Water Phase before Extraction (ppm)" of Table 2-1 were dissolved in ultrapure water to prepare each of metal ion-containing aqueous solutions (W2) to (W4).

The results of measuring the pH of the prepared metal ion-containing aqueous solutions (W1) to (W4) using a pH meter (SK-620 pH II, measured by SATOTECH) are shown below.
Metal ion-containing aqueous solution (W1): 6.6
Metal ion-containing aqueous solution (W2): 6.2
Metal ion-containing aqueous solution (W3): 6.5
Metal ion-containing aqueous solution (W4): 7.0

### <Preparation of Metal Extractant Solution (Oil Phase)>

Each of the synthesized or prepared compounds was added to a 100 mL measuring flask, and was diluted using kerosine (manufactured by FUJIFILM Wako Pure Chemicals Corporation) at room temperature. As a result, metal extractant solutions (Y1) to (Y9) and (Yc1) to (Yc4) (concentration: 450 mM) including the compounds as metal extractants were prepared, respectively.

### [Example 1]

10 mL of the extractant solution (Y1) with respect to 10 mL of the prepared metal ion-containing aqueous solution (W1) was added to a 30 mL vial tube, and the mixture was stirred (rotation speed: 150 rpm) using a stirrer tip (diameter: 6 mm, length: 20 mm) at 25°C for 30 minutes (pre-mixing). In this case, the mixing amount (unit: equivalent) of the compound E-1 with respect to the total content of metal ions to be coordinated (that have the same definition as the extracted metal ions; in Example 1, Co and Ni) was 0.78. Next, a 10 M sodium hydroxide aqueous solution or a 10 M hydrochloric acid was added to adjust the pH of the mixed solution to a value shown in the column "pH during Mixing" of Table 2-2. Further, the solution was stirred (rotation speed: 150 rpm) at 25°C for 30 minutes, and was left to stand at the same temperature for 1 hour. After verifying that the solution was separated into two phases including the organic phase (oil phase) and the water phase, the separated water phase was extracted, and the separation and recovery of the metal ions was performed.

The pH of the mixed solution was measured using a pH meter (SK-620 pH II, manufactured by SATOTECH).

The metal ions extracted in Example 1 are shown in the column "Kind" of the column "Extracted Metal Ions" of Table 2-2, and the metal ions extracted in the maximum amount are shown in the column "Maximum Extracted Ions" of Table 2-2.

### <Examples 2 to 12 and Comparative Examples 1 to 4>

The separation and recovery of the metal ions according to Examples 2 to 12 and Comparative Examples 1 to 4 was performed using the same method as that of Example 1, except that the metal ion-containing aqueous solution and the extractant solution were changed to a combination shown in the column "Water Phase" of Table 2-1 and the column "Oil Phase" of Table 2-2 (hereinafter, Tables 2-1 and 2-2 will be collectively referred to as Table 2), and the pH during the mixing of the water phase and the oil phase was set to a value shown in the column "pH during Mixing" of Table 2-2 for mixing and standing. The metal ions extracted in each of Examples are shown in the column "Kind" of the column "Extracted Metal Ions" of Table 2-2, and the metal ions extracted in the maximum amount are shown in the column "Maximum Extracted Ions" of Table 2-2.

Regarding each of the water phases used in Examples and Comparative Examples and the water phases after the extraction, each of the contents of dissolved metal ions was determined using an inductively coupled plasma-optical emission spectrometer (ICP-OES) (Optima 7300 D (trade name), manufactured by Perkin Elmer Co., Ltd.). The measured value of the content of the dissolved metal ions in each of the water phases prepared in Examples and Comparative Examples is shown in the column of "Metal Ion Concentration in Water Phase before Extraction (ppm)" of Table 2-1, and the measured value of the content of the dissolved metal ions in each of the water phases after mixing in Examples and Comparative Examples is shown in the column of "Metal Ion Concentration in Water Phase after Extraction (ppm)" of Table 2-1. "," in the metal ion concentration of the table represents a breakpoint of digits without representing a decimal point.

### <Evaluation 1: Evaluation of Selectivity (Separability)>

In each of Examples and Comparative Examples, the amount of metal ions extracted (difference, unit: ppm) was calculated from the metal ion concentration in the water phase before the extraction and the metal ion concentration in the water phase after the extraction, and the maximum amount (ppm) of the metal ions extracted was divided by the total amount (ppm) of the other metal ions extracted to calculate a selection ratio as a ratio between the amounts thereof extracted. The result is shown in the column "Selection Ratio" of Table 2-2.

In the present test, a higher value of the selection ratio represents that the selectivity (separability) of the specific metal ions is excellent, and a value of 3.0 or higher is evaluated as Pass.

### <Evaluation 2: Phase Separation Rate>

In each of Examples and Comparative Examples, in a case where the solution was stirred at 25°C for 30 minutes and was left to stand at the same temperature, an elapsed time until the solution was separated into two phases was measured, and the phase separation rate of the water phase and the oil phase was evaluated.

In the present test, as the elapsed time decreases, the phase separation rate increases, and an evaluation standard "D" or higher is the pass level.

### -Evaluation Standards-

A: shorter than 2 minutes
B: 2 minutes or longer and shorter than 3 minutes
C: 3 minutes or longer and shorter than 4 minutes
D: 4 minutes or longer and shorter than 5 minutes
E: 5 minutes or longer and shorter than 10 minutes
F: 10 minutes or longer

**[Table 2-1]**

| No. | Water Phase | Metal Ion Concentration in Water Phase before Extraction (ppm) | | | | | Metal Ion Concentration in Water Phase after Extraction (ppm) | | | | |
|---|---|---|---|---|---|---|---|---|---|---|---|
| | | Co | Ni | Zn | Cu | Rh | Co | Ni | Zn | Cu | Rh |
| Example 1 | W1 | 17,000 | 17,000 | 0 | 0 | 0 | 0 | 15,200 | 0 | 0 | 0 |
| Example 2 | W1 | 17,000 | 17,000 | 0 | 0 | 0 | 0 | 14,900 | 0 | 0 | 0 |
| Example 3 | W1 | 17,000 | 17,000 | 0 | 0 | 0 | 0 | 15,400 | 0 | 0 | 0 |
| Example 4 | W1 | 17,000 | 17,000 | 0 | 0 | 0 | 0 | 15,400 | 0 | 0 | 0 |
| Example 5 | W1 | 17,000 | 17,000 | 0 | 0 | 0 | 0 | 16,000 | 0 | 0 | 0 |
| Example 6 | W2 | 17,000 | 17,000 | 17,000 | 0 | 0 | 12,500 | 17,000 | 0 | 0 | 0 |
| Example 7 | W3 | 17,000 | 0 | 0 | 17,000 | 0 | 12,100 | 0 | 0 | 0 | 0 |
| Example 8 | W1 | 17,000 | 17,000 | 0 | 0 | 0 | 0 | 14,200 | 0 | 0 | 0 |
| Example 9 | W4 | 0 | 17,000 | 0 | 0 | 17,000 | 0 | 13,200 | 0 | 0 | 0 |
| Example 10 | W1 | 17,000 | 17,000 | 0 | 0 | 0 | 0 | 15,000 | 0 | 0 | 0 |
| Example 11 | W1 | 17,000 | 17,000 | 0 | 0 | 0 | 0 | 14,500 | 0 | 0 | 0 |
| Example 12 | W1 | 17,000 | 17,000 | 0 | 0 | 0 | 0 | 13,900 | 0 | 0 | 0 |
| Comparative Example 1 | W1 | 17,000 | 17,000 | 0 | 0 | 0 | 0 | 11,000 | 0 | 0 | 0 |
| Comparative Example 2 | W1 | 17,000 | 17,000 | 0 | 0 | 0 | 0 | 1,000 | 0 | 0 | 0 |
| Comparative Example 3 | W1 | 17,000 | 17,000 | 0 | 0 | 0 | 0 | 8,400 | 0 | 0 | 0 |
| Comparative Example 4 | W1 | 17,000 | 17,000 | 0 | 0 | 0 | 0 | 8,000 | 0 | 0 | 0 |

**[Table 2-2]**

| No. | Extracted Metal Ions | | pH during Mixing | Oil Phase | Metal Extractant | Selection Ratio | Phase Separation Rate |
|---|---|---|---|---|---|---|---|
| | Kind | Maximum Extracted Ions | | | | | |
| Example 1 | Co, Ni | Co | 5.6 | Y1 | E-1 | 9.4 | C |
| Example 2 | Co, Ni | Co | 5.2 | Y2 | E-2 | 8.1 | C |
| Example 3 | Co, Ni | Co | 5.9 | Y3 | E-3 | 10.6 | A |
| Example 4 | Co, Ni | Co | 4.2 | Y4 | E-4 | 10.6 | C |
| Example 5 | Co, Ni | Co | 4.8 | Y5 | E-5 | 17.0 | B |
| Example 6 | Co, Zn | Zn | 2.7 | Y2 | E-2 | 3.8 | C |
| Example 7 | Co, Cu | Cu | 3.5 | Y2 | E-2 | 3.5 | C |
| Example 8 | Co, Ni | Co | 5.7 | Y6 | E-6 | 6.1 | D |
| Example 9 | Ni, Rh | Rh | 5.9 | Y2 | E-2 | 4.5 | C |
| Example 10 | Co, Ni | Co | 6.4 | Y7 | E-7 | 8.5 | D |
| Example 11 | Co, Ni | Co | 3.8 | Y8 | E-8 | 6.8 | D |
| Example 12 | Co, Ni | Co | 3.1 | Y9 | E-9 | 5.5 | D |
| Comparative Example 1 | Co, Ni | Co | 4.6 | Yc1 | PC-88A | 2.8 | E |
| Comparative Example 2 | Co, Ni | Co | 6.1 | Yc2 | VA-10 | 1.1 | F |
| Comparative Example 3 | Co, Ni | Co | 4.1 | Yc3 | T-1 | 2.0 | E |
| Comparative Example 4 | Co, Ni | Co | 5.6 | Yc4 | T-2 | 1.9 | E |

The following can be seen from the results and the like shown in Table 2.

In Comparative Examples 1 to 4 using PC-88A, VA-10, T-1, and T-2 as metal extractants in the related art in the separation recovery of metal ions in the wet extraction method, the two kinds of metal ions present in the metal ion-containing aqueous solution (W1) were extracted to the oil phase. Accordingly, not only Co but also Ni were extracted in a large amount, and thus the selection ratio of Co ions extracted in the maximum amount was low. In addition, in all of Comparative Examples 1 to 4, the elapsed time until the solution was separated into two phases was long (the phase separation rate was low), and the productivity of the wet extraction method was poor.

On the other hand, in all of Examples 1 to 12 where the compounds E-1 to E-9 according to the embodiment of the present invention were used as the metal extractants, two or kinds of metal ions among the metal ions present in the metal ion-containing aqueous solution were extracted to the oil phase. However, metal ions extracted in the maximum amount (Examples 1 to 5, 8, and 10 to 12: Co ions, Example 6: Zn ions, Example 7: Cu ions, and Example 9: Rh ions) were able to be extracted from the water phase to the oil phase substantially in the total amount (with high recovery rate) with a high selection ratio with respect to the metal ions other than the metal ions extracted in the maximum amount. Further, in all of Examples 1 to 12, the elapsed time until the solution was separated into two phases was short (the phase separation rate was high), and the productivity of the wet extraction method was able to be improved.

In a case where the same experiment was performed using the same method as that of Examples 1 to 12 and Comparative Examples 1 to 4, except that the metal ion concentration in the water layer was reduced to 1/5, the same results were obtained.

It can be seen that, in a case where the compound according to the embodiment of the present invention is used as a metal extractant in the wet extraction method, while rapidly separating the solution into the water phase and the oil phase, metal ions present in the water phase can be separated and recovered with high selectivity and high recovery rate. Further, while rapidly separating the solution into the water phase and the oil phase, specific metal ions among two or more kinds of metal ions belonging to different groups having similar physical behaviors and similar chemical behaviors, in particular, one kind of metal ions among metal ions belonging to Groups 9 and 10 that can be recovered from waste LiB can be separated and recovered with high selectivity and high recovery rate.

From the above results, it can be seen that, by stripping the oil phase obtained in each of Examples using a typical method and conditions, the metal ions can be separated and recovered to the oil phase simply with high selectivity, high recovery rate, and high productivity in a large recovery amount without deterioration in high selectivity.

Incidentally, in the technique of recovering specific metal ions from the water phase including a plurality of metal ions, it is generally difficult to recover the specific metal ions with high selectivity and recovery rate, and in a case where high selectivity is maintained, the recovery rate decreases. Therefore, in order to achieve a predetermined recovery rate, currently, it is required to perform the separation recovery operation multiple times. On the other hand, according to the present invention, using the simple method, one kind of metal ions among two kinds of different-group metal ions can be extracted from the water phase to the oil phase substantially in the entire amount with high productivity and high selectivity. Therefore, in consideration of the current conditions, the technical significance of the present invention is high from the viewpoint that, through the stripping step or the like from the obtained oil phase, one kind of metal ions can be recovered simply and with high productivity and a small number of steps while further improving selectivity with high recovery rate.

The present invention has been described with the embodiments thereof, any details of the description of the present invention are not limited unless described otherwise, and it is obvious that the present invention is widely construed without departing from the gist and scope of the present invention described in the accompanying claims.

The present application claims priority based on JP2023-050476 filed on March 27, 2023, the entire content of which is incorporated herein by reference.

## Claims

1. A metal extractant that extracts metal ions present in a water phase to an oil phase,
wherein the metal extractant is represented by Formula (I), 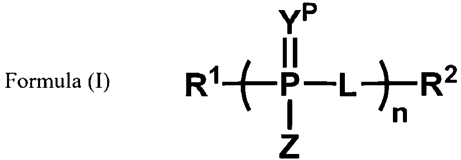
in Formula (I), R¹ and R² each independently represent a substituent having a molecular weight of 100 or higher, in which at least one of the substituents has a molecular weight of 160 or higher,
Y^{P} represents a sulfur atom or an oxygen atom,
Z represents a hydroxy group, a sulfanyl group, or a hydroxyaryl group,
L represents a single bond, in which in a case where n represents 2 or more, L interposed between two adjacent P's represents a single bond or a linking group, and
n represents an integer of 1 to 6.

2. The metal extractant according to claim 1,
wherein at least one of R¹ or R² represents a substituent including any one kind of a nitrogen atom, an oxygen atom, or a sulfur atom.

3. The metal extractant according to claim 1,
wherein n represents 1.

4. The metal extractant according to claim 1,
wherein at least one of R¹ or R² represents a substituent having a branched structure.

5. The metal extractant according to claim 1,
wherein at least one of R¹ or R² represents a substituent including a hydrocarbon group having 3 or more branched carbon atoms or a substituent including a hydrocarbon group having 9 or more carbon atoms.

6. The metal extractant according to claim 1,
wherein at least one of R¹ or R² represents a substituent including a hydrocarbon group having 1 or more branched carbon atoms and having 9 or more carbon atoms.

7. The metal extractant according to claim 1,
wherein at least one of R¹ or R² represents a substituent having a ring structure.

8. The metal extractant according to claim 1,
wherein the metal ions are ions of a metal element belonging to Group 1 to Group 14 in a periodic table.

9. The metal extractant according to claim 1,
wherein the metal extractant is used for extraction and separation of two or more kinds of metal ions belonging to different groups in a periodic table among the metal ions.

10. The metal extractant according to claim 6,
wherein the metal extractant is used for extraction and separation of two or more kinds of metal ions belonging to different groups in a periodic table among the metal ions.

11. A separation recovery method of metal ions, the separation recovery method comprising:
mixing a water phase including plural kinds of metal ions with an oil phase including the metal extractant according to any one of claims 1 to 10.

12. A compound represented by Formula (I), 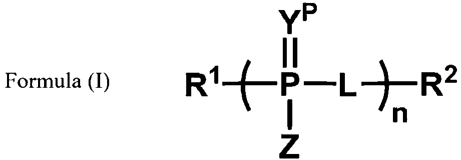
in Formula (I), R¹ and R² each independently represent a substituent having a molecular weight of 100 or higher, in which at least one of the substituents has a molecular weight of 160 or higher,
at least one of R¹ or R² represents a substituent having a branched structure,
Y^{P} represents a sulfur atom or an oxygen atom,
Z represents a hydroxy group, a sulfanyl group, or a hydroxyaryl group,
L represents a single bond, in which in a case where n represents 2 or more, L interposed between two adjacent P's represents a single bond or a linking group, and
n represents an integer of 1 to 6.
